(19) Europäisches Patentamt
European Patent Office
Office européen des brevets

(11) Veröffentlichungsnummer: **0 136 703**
**B1**

(12) **EUROPÄISCHE PATENTSCHRIFT**

(45) Veröffentlichungstag der Patentschrift: **30.01.91**

(21) Anmeldenummer: **84111802.9**

(22) Anmeldetag: **03.10.84**

(51) Int. Cl.$^5$: **C 07 C 251/32,**
C 07 C 255/61, C 07 C 225/22,
C 07 C 221/00, A 01 N 35/10

(54) **Cyclohexenonderivate, Verfahren zu ihrer Herstellung und ihre Verwendung zur Bekämpfung unerwünschten Pflanzenwuchses.**

(30) Priorität: **06.10.83 DE 3336354**

(43) Veröffentlichungstag der Anmeldung:
**10.04.85 Patentblatt 85/15**

(45) Bekanntmachung des Hinweises auf die Patenterteilung:
**30.01.91 Patentblatt 91/05**

(84) Benannte Vertragsstaaten:
**BE CH DE FR GB IT LI NL**

(56) Entgegenhaltungen:
**DE-A-3 248 554**

(73) Patentinhaber: **BASF Aktiengesellschaft**
**Carl-Bosch-Strasse 38**
**D-6700 Ludwigshafen (DE)**

(72) Erfinder: **Keil, Michael, Dr.**
**Fontanestrasse 4**
**D-6713 Freinsheim (DE)**
Erfinder: **Becker, Rainer, Dr.**
**Im Haseneck 22**
**D-6702 Bad Duerkheim (DE)**
Erfinder: **Jahn, Dieter, Dr.**
**Burgunder Weg 8**
**D-6803 Edingen-Neckarhausen (DE)**
Erfinder: **Goetz, Norbert, Dr.**
**Schoefferstrasse 25**
**D-6520 Worms 1 (DE)**
Erfinder: **Schirmer, Ulrich, Dr.**
**Berghalde 79**
**D-6900 Heidelberg (DE)**
Erfinder: **Wuerzer, Bruno, Dr. Dipl.-Landwirt**
**Ruedigerstrasse 13**
**D-6701 Otterstadt (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 136 703 B1

**Beschriebung**

Die Erfindung betrifft Cyclohexenonderivate, Verfahren zu ihrer Herstellung, sowie Herbizide, die diese Verbindungen als Wirkstoffe enthalten.

Es ist bekannt, Cyclohexenonderivate zur Bekämpfung von unerwünschten Gräsern in breitblättrigen Kulturen zu verwenden (DE—A—24 39 104), Außerdem ist aus DE—A—32 48 554 bekannt, daß Cyclohexen-1-onderivate, die in 5-Stellung einen para-substituierten Phenylrest tragen, grasartige Unkräuter in Mais und Weizen bekämpfen.

Der Erfindung lag daher die Aufgabe zugrunde, neue wirksame Cyclohexenon-derivate zu finden, deren herbizide Wirkung besser ist als die zum Stande der Technik gehörenden Cyclohexenonderivate.

Demgemäß wurden neue herbizid wirksame Cyclohexenonderivate der Formel

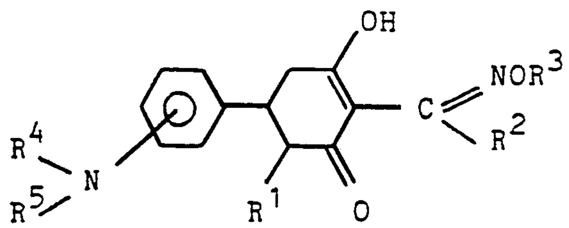

(I),

in der

$R^1$ Wasserstoff, Methoxycarbonyl, Ethoxycarbonyl, Methyl oder Cyano,

$R^2$ Alkyl mit 1 bis 4 C-Atomen,

$R^3$ Alkyl mit 1 bis 4 C-Atomen, Alkenyl mit 3 oder 4 C-Atomen, Halogenalkenyl mit 3 oder 4 C-Atomen und 1 bis 3 Halogensubstituenten oder Propargyl und

$R^4$ Wasserstoff oder Alkyl mit 1 bis 4 C-Atomen bedeutetn, und

für den Fall, daß die Gruppe $—NR^4R^5$ in meta-Position steht,

$R^5$ Wasserstoff, Alkyl mit 1 bis 4 C-Atomen, Formyl, gegebenenfalls durch Nitro, Halogen, Alkyl oder Alkoxy substituiertes Benzoyl, Phenoxycarbonyl, Alkylthiocarbonyl, N,N-Dialkylcarbamoyl, N-Alkylcarbamoyl, N-Alkoxy-N-alkylcarbamoyl oder N,N-Dialkylsulfamoyl bedeutet,

und für den Fall, daß die Gruppe $—NR^4R^5$ in para-Position steht,

$R^5$ Wasserstoff, Alkyl mit 1 bis 4 C-Atomen, gegebenenfalls durch Nitro, Halogen, Alkyl mit 2 bis 4 C-Atomen oder Alkoxy mit 1 bis 4 C-Atomen substituiertes Benzoyl, Phenoxycarbonyl, Alkylthiocarbonyl oder N,N-Dialkylsulfamoyl bedeutet.

und Salz dieser Verbindungen gefunden.

Die Cyclohexenonderivate der Formel I können in mehreren Formen auftreten, die alle vom Patentanspruch umfaßt werden:

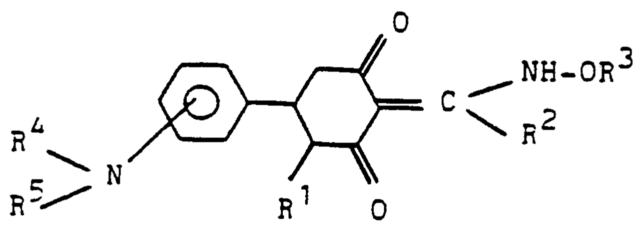

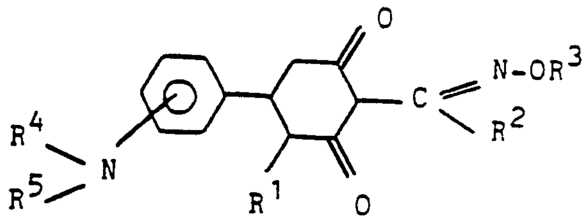

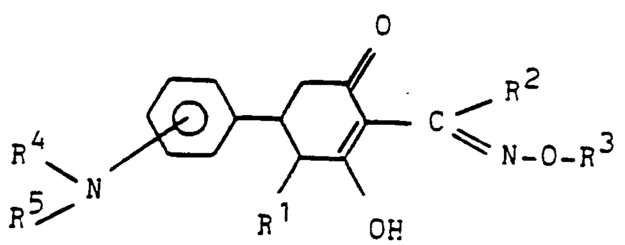

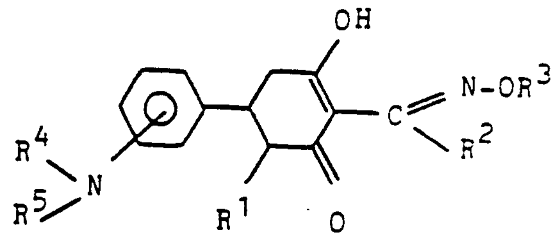

In Formel I steht $R^1$ für Wasserstoff, Methoxycarbonyl, Ethoxycarbonyl, Methyl oder Cyano.

$R^2$ in Formel I steht für unverzweigte oder verzweigte Alkylreste mit 1 bis 4 Kohlenstoffatomen, d.h. für Methyl, Ethyl, n-Propyl, i-Propyl, n-Butyl, sec.-Butyl, i-Butyl, tert.-Butyl.

Reste für $R^3$ in Formel I sind Propargyl, Alkyl mit 1 bis 4 Kohlenstoffatomen, Alkenyl mit 3 oder 4 C-Atomen oder Halogenalkenyl mit 3 oder 4 C-Atomen, das bis zu drei Halogensubstituenten enthalten kann, vorzugsweise Chloralkenyl, beispielsweise Methyl, Ethyl, n-Propyl, i-Propyl, n-Butyl, sec.-Butyl, i-Butyl,

tert.-Butyl, Allyl, 1-Chlorprop-1-en-3-yl, 2-Chlorprop-1-en-3-yl, 1,3-Dichlorprop-1-en-3-yl, 1,1,2-Trichlorprop-1-en-3-yl.

Reste für $R^4$ in Formel I sind Wasserstoff oder Alkyl mit 1 bis 4 C-Atomen, d.h. Methyl, Ethyl, Propyl, Isopropyl, n-Butyl, sec.-Butyl, i-Butyl, tert-Butyl.

Die Gruppe —$NR^4R^5$ in Formel I steht in meta- oder para-Position.

Die Alkylgruppen für $R^5$ sowie die Alkyl- und Alkoxygruppen in den für $R^5$ angegebenen Resten können unverzweigt oder verzweigt sein und haben, soweit nichts anderes angegeben ist, 1 bis 4 C-Atome, d.h. für Alkyl oder Alkoxy kommen Methyl, Ethyl, n-Propyl, i-Propyl, n-Butyl, s-Butyl, i-Butyl, t-Butyl, Methoxy, Ethoxy, n-Propoxy, i-Propoxy, n-Butoxy, i-Butoxy, s-Butoxy und t-Butoxy in Betracht.

Beispiele für $R^5$ in meta-ständigen —$NR^4R^5$-Gruppen sind: Wasserstoff, Methyl, Ethyl, Formyl, Benzoyl, 3-Nitrobenzoyl, 2-Chlorbenzoyl, 4-Methylbenzoyl, 4-Methoxybenzoyl, Phenoxycarbonyl, Methylthiocarbonyl, Ethylthiocarbonyl, Isopropylthiocarbonyl, N,N-Dimethylcarbamoyl, N-Methylcarbamoyl, N-Methoxy-N-methylcarbamoyl, N,N-Dimethylsulfamoyl oder N,N-Diethylsulfamoyl.

Beispiele für $R^5$ in para-ständigen —$NR^4R^5$-Gruppen sind: Wasserstoff, Methyl, Ethyl, Benzoyl, 3-Nitrobenzoyl, 2-Chlorbenzoyl, 4-Methoxybenzoyl, Phenoxycarbonyl, Methylthiocarbonyl, Ethylthiocarbonyl, Isopropylthiocarbonyl, N,N-Dimethylcarbamoyl oder N,N-Diethylsulfamoyl.

Als Salze der Verbindungen der Formel I kommen beispielsweise die Alkalimetallsalze, insbesondere die Kalium- oder Natriumsalze, Erdalkalimetallsalze, insbesondere Calcium-, Magnesium- oder Bariumsalze sowie Mangan-, Kupfer-, Zink- oder Eisensalze, und Ammonium- und Phosphoniumsalze, beispielsweise Alkylammonium-, Dialkylammonium-, Trialkyl- oder Tetraalkyl-ammoniumsalze, Benzyltrialkylammoniumsalze, Triphenylphosphoniumsalze, Trialkylsulfoniumsalze oder Trialkylsulfoxoniumsalze in Betracht.

Cyclohexenonderivate der Formel

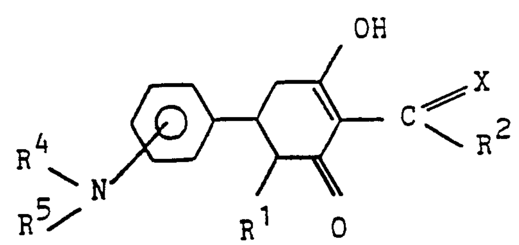

(II),

in der

die Gruppe —$NR^4R^5$ in meta- oder para-Position steht,

X Sauerstoff oder —NH- bedeutet und

$R^1$, $R^2$, $R^4$ und $R^5$ die oben genannten Bedeutungen haben, sind neu und stellen essentielle Vorprodukte für die herbiziden Wirkstoffe der Formel I dar. Insbesondere die Verbindungen der Formel II, in der $R^1$, $R^4$, $R^5$ Wasserstoff, $R^2$ Alkyl mit 1 bis 4 C-Atomen, und X = NH bedeuten, dienen als zentrale Vorprodukte für herbizide Wirkstoffe der Formel I.

Die herbizid wirksamen Cyclohexenonderivate der Formel I können durch Umsetzung von Verbindungen der Formel II mit Hydroxylaminderivaten $R^3O—NH_3Y$, in der $R^3$ die obengenannten Bedeutungen hat und Y ein Anion bedeutet, erhalten werden.

Man führt die Reaktion zweckmäßigerweise in heterogener Phase in einem inerten Verdünnungsmittel bei einer Temperatur zwischen 0 und 80°C oder zwischen 0°C und dem Siedepunkt des Reaktionsgemisches in Gegenwart einer Base durch. Geeignete Basen sind beispielsweise Carbonate, Hydrogencarbonate, Acetate, Alkoholate, Hydroxide oder Oxide von Alkali- oder Erdalkalimetallen, insbesondere von Natrium, Kalium, Magnesium, Calcium. Außerdem können auch organische Basen, wie Pyridin oder tertiäre Amine, Verwendung finden.

Die Umsetzung verläuft besonders gut in einem pH-Bereich von 2 bis 9, insbesondere von 4,5 bis 5,5. Die Einstellung des pH-Bereiches erfolgt zweckmäßigerweise durch Zusatz von Acetaten, beispielsweise Alkalimetallacetaten, insbesondere von Natrium- oder Kaliumacetat oder einer Mischung aus beiden Salzen. Alkalimetallacetate werden beispielsweise in Mengen von 0,5 bis 2 Mol, bezogen auf die Ammoniumverbindung der Formel $R^3O—NH_3Y$, zugesetzt.

Als Lösungsmittel sind beispielsweise Dimethylsulfoxid, Alkohole, wie Methanol, Ethanol, Isopropanol, Benzol, gegebenenfalls chlorierte Kohlenwasserstoffe, wie Chloroform, Dichlorethan, Hexan, Cyclohexan, Ester, wie Essigsäureethylester, Ether, wie Dioxan, Tetrahydrofuran, geeignet.

Die Umsetzung ist nach wenigen Stunden beendet, das Reaktionsprodukt kann dann durch Einengen der Mischung, Zugabe von Wasser und Extraktion mit einem unpolaren Lösungsmittel, wie Methylenchlorid und Abdestillieren des Lösungsmittels unter vermindertem Druck isoliert werden.

Die Verbindungen der Formel I können außerdem durch Umsetzen der Verbindungen der Formel II mit Hydroxylaminen der Formel $R^3O—NH_2$, in der $R^3$ die obengenannten Bedeutungen hat, in inerten Verdünnungsmitteln bei einer Temperatur zwischen 0°C und dem Siedepunkt des Reaktionsgemisches, insbesondere zwischen 15 und 70°C, erhalten werden. Gegebenenfalls kann das Hydroxylamin als wäßrige Lösung eingesetzt werden.

Im Falle der Reaktion einer Verbindung der Formel II, in der X —NH— bedeutet, wird zur vollständigen Reaktion ein 1,5-bis 2-molarer Überschuß an freiem O-Alkylhydroxylamin verwendet; im Falle der Umsetzung von Verbindungen der Formel II, in der X Sauerstoff bedeutet, genügt die 1 bis 1,1-molare Menge.

Geeignete Lösungsmittel für diese Umsetzung sind beispielsweise Alkohole, wie Methanol, Ethanol, Isopropanol, Cyclohexanol, gegebenenfalls chlorierte Kohlenwasserstoffe, wie Hexan, Cyclohexan, Methylenchlorid, Toluol, Dichlorethan, Ester, wie Essigsäureethylester, Nitrile, wie Acetonitril, cyclische Ether, wie Tetrahydrofuran.

Die Alkalimetallsalze der Verbindungen der Formel I können durch Behandeln dieser Verbindungen mit Natrium- oder Kaliumhydroxid in wäßriger Lösung oder in einem organischen Lösungsmittel, wie Methanol, Ethanol, Aceton, erhalten werden. Auch Natrium- und Kaliumalkoholate können als Basen dienen.

Die anderen Metallsalze, z.B. die Mangan-, Kupfer-, Zink-, Eisen-, Calcium-, Magnesium- und Bariumsalze können aus den Natriumsalzen durch Reaktion mit den entsprechenden Metallchloriden in wäßriger Lösung hergestellt werden. Ammonium-, Phosphonium-, Sulfonium- und Sulfoxoniumsalze können durch Umsetzung von Verbindungen der Formel I mit Ammonium-, Phosphonium-, Sulfonium- oder Sulfoxoniumhydroxiden, gegebenenfalls in wäßriger Lösung hergestellt werden.

Die Verbindungen der Formel II, in der X Sauerstoff bedeutet, können aus Cyclohexan-1,3-dionen der Formel

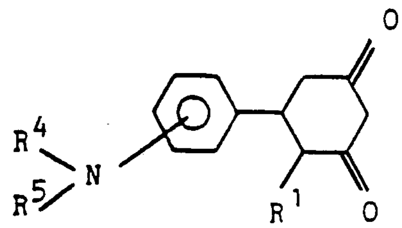

(VII),

nach literaturbekannten Methoden (Tetrahedron Letters, *29*, 2491 (1975)) hergestellt werden.

Es ist auch möglich, Verbindungen der Formel II, in der X Sauerstoff bedeutet, über die Zwischenstufe der Enolester, die bei der Acylierung von Verbindungen der Formel VII eventuell als Isomerengemische anfallen und in Gegenwart von Imidazol- oder Pyridinderivaten umgelagert werden (JP—OS 79/063052), herzustellen.

Zu den Verbindungen der Formel VII gelangt man wiederum nach literaturbekannten Verfahren, wie dies aus folgendem Schema hervorgeht:

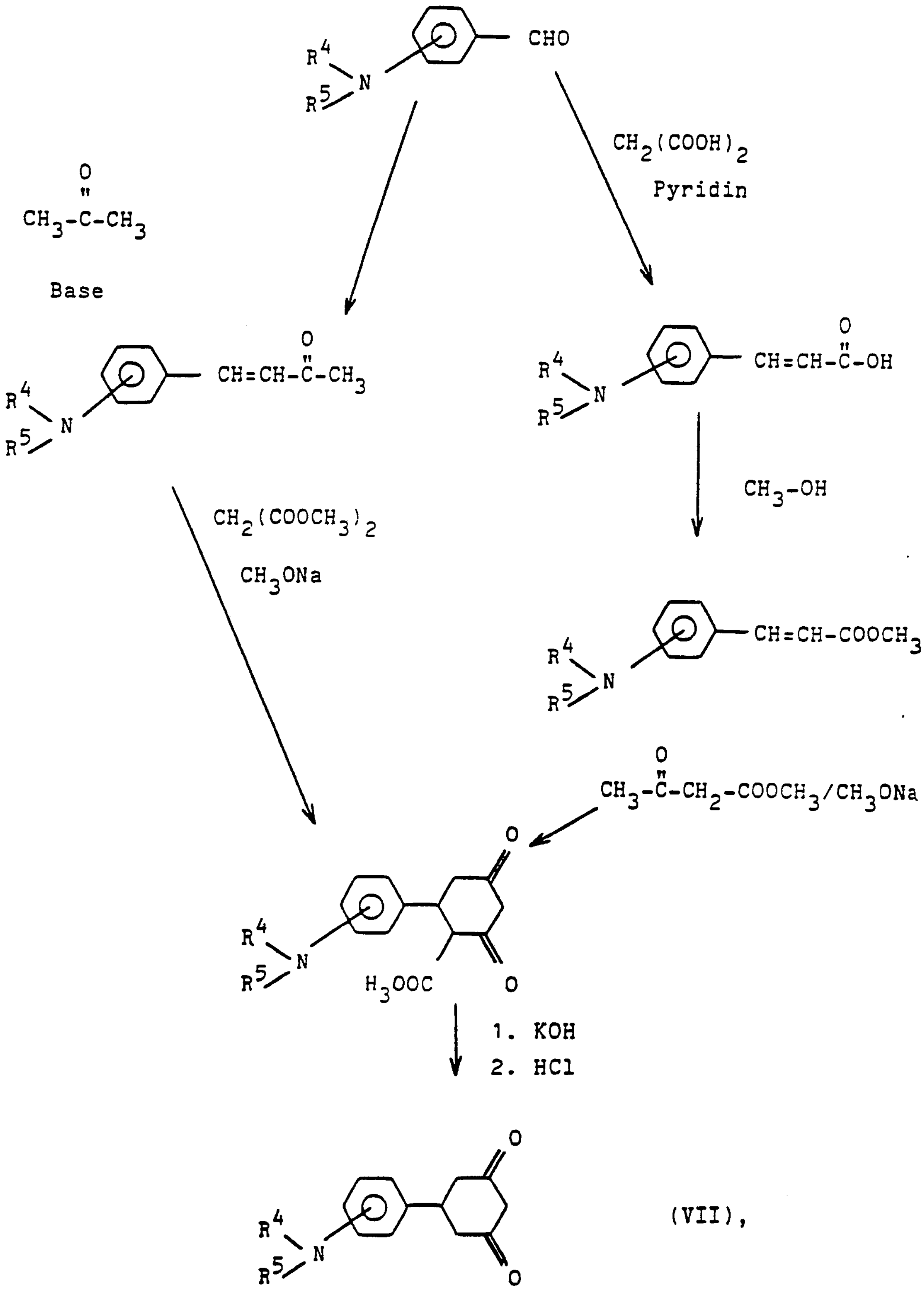


(VII),

Die Cyclohexenonderivate der Formeln

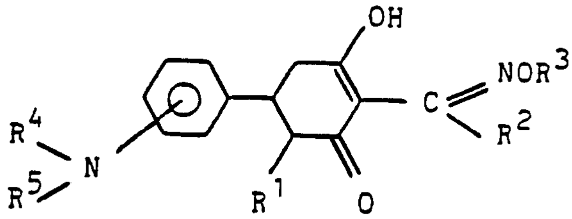

(I)

und

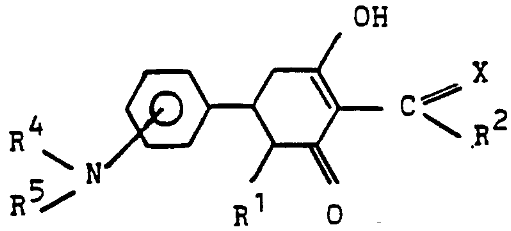

(II),

in denen

$R^1$ und $R^4$ Wasserstoff

$R^2$ Alkyl mit 1 bis 4 C-Atomen,

X Sauerstoff oder —NH— und

$R^5$ bei meta-ständiger —$NR^4R^5$-Gruppe Formyl, gegebenenfalls durch Nitro, Halogen, Alkyl oder Alkoxy substituiertes Benzoyl, Phenoxycarbonyl, Alkylthiocarbonyl, N,N-Dialkylcarbamoyl, N-Alkoxy-N-alkylcarbamoyl, N,N-Dialkylsulfamoyl oder $R^5$ bei para-ständiger —$NR^4R^5$-Gruppe gegebenenfalls durch Nitro, Halogen, Alkyl oder Alkoxy substituiertes Benzoyl, Phenoxycarbonyl, Alkylthiocarbonyl oder N,N-Dialkylsulfamoyl bedeuten,

können durch Umsetzung einer Verbindung der Formel I bzw. II, in der $R^5$ Wasserstoff bedeutet, mit elektrophilen Reagentien $R^5$—Y (III), in denen $R^5$ die oben angegebenen Bedeutungen hat und Y eine Austrittsgruppe, wie Chlor, Brom oder Carboxylat ist, erhalten werden.

Die Umsetzung wird gegebenenfalls in einem inerten organischen Lösungsmittel durchgeführt. Geeignet sind z.B. Kohlenwasserstoffe, wie Ligroin, Benzin, Toluol, Pentan, Cyclohexan, Halogenkohlenwasserstoffe, wie Methylenchlorid, Chloroform, Dichlorethan, Chlorbenzol, o-, m- oder p-Dichlorbenzol, Nitrikohlenwasserstoffe, wie Nitrobenzol, Nitromethan, Nitrile, wie Acetonitril, Butyronitril, Benzonitril, Ether, wie Diethylether, Tetrahydrofuran, Dioxan, Ester, wie Essigsäureethylester, Propionsäuremethylester, Ketone, wie Aceton, Methylethylketon, oder Amide, wie Dimethylformamid, Formamid. Auch Gemische dieser Lösungsmittel können verwendet werden. Die Menge an Lösungsmittel, bezogen auf eingesetztes Anilinderivat beträgt 100 bis 5 000 Gew.-%.

Zweckmäßigerweise wird die Umsetzung in Gegenwart eines üblichen Säureakzeptors durchgeführt. In Betracht kommen Alkalihydroxide, Alkalicarbonate, Alkalihydrogencarbonate, Erdalkalihydroxide, Erdalkalicarbonate, Erdalkalihydrogencarbonate, Erdalkalioxide oder Amine, beispielsweise Natriumhydrogencarbonat, Kaliumcarbonat, Triethylamin, Tributylamin, Pyridin, N,N-Dimethylanilin, N,N-Dimethyl-N-cyclohexylamin, Chinolin. Die Menge an Säureakzptor beträgt 1 bis 4 Mol, bezogen auf 1 Mol eingesetztes Anilinderivat.

Die Reaktionstemperatur liegt zwischen −20 und +150°C, vorzugsweise zwischen 20 und 80°C. Die elektrophilen Reagentien $R^5Y$ und die als Ausgangsverbindungen verwendeten Verbindungen der Formeln I bzw. II werden bevorzugt in äquimolarem Verhältnis eingesetzt.

Beispiele für Verbindungen der Formel $R^5Y$ sind Carbonsäurehalogenide, Carbonsäureanhydride, Chlorameisensäureester, Alkylthiocarbonylchloride, N,N-Dialkylcarbamoylchloride, N-Alkoxy-N-alkylcarbamoylchloride, N-Alkylsulfamoylchloride, wie Carbonsäurehalogenide der Formel

$$R^7—CO—Hal$$

in der

$R^7$ für Alkyl mit 1 bis 4 C-Atomen oder gegebenenfalls durch Nitro, Halogen, Alkyl mit 1 bis 4 C-Atomen oder Alkoxy mit 1 bis 3 C-Atomen substituiertes Phenyl steht,

Formylacetanhydrid der Formel

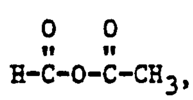

Chlorameisensäureester der Formel

$$R^8O—CO—Hal$$

in der
$R^8$ für Alkyl mit 1 bis 4 C-Atomen oder Phenyl steht,

Alkylthiocarbonylchloride der Formel

$$R^9S—CO—Cl$$

in der
$R^9$ für Alkyl mit 1 bis 4 C-Atomen steht,

N,N-Dialkylaminocarbamoylchloride der Formel

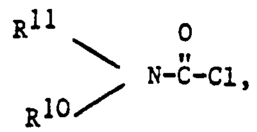

in der
$R^{10}$ und $R^{11}$ für Alkylreste aus 1 bis 4 C-Atomen stehen,

Die Herstellung einer Verbindung der Formel

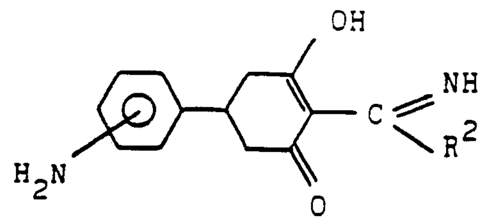

(IIb),

in der die Aminogruppe in meta- oder para-Position steht und $R^2$ Alkyl mit 1 bis 4 C-Atomen bedeutet, erfolgt durch Reduktion einer Verbindung der Formel

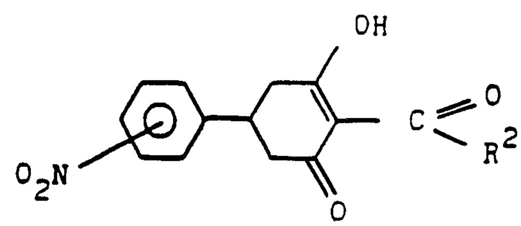

(VI),

in der die Nitrogruppe in meta- oder para-Position steht und $R^2$ Alkyl mit 1 bis 4 C-Atomen bedeuten, mit Eisen(II)-salzen in Gegenwart von Ammoniak, Wasser und eines organischen Lösungsmittels.

Einige der allgemein bekannten Herstellungsverfahren für aromatische Amine durch Reduktion der Nitroverbindungen (Houben-Weyl, Methoden der organischen Chemie, Bd. 11/1, s. 360, Georg Thieme Verlag Stuttgart, 4. Auflage, 1957), wie Reduktion mit Eisen und Mineralsäuren, Reduktion mit Sulfiden und Sulfiten, Reduktionen mit Zinn, Zink, Aluminium, sind infolge der bei den Verbindungen der Formel VI vorhandenen Keto-Enol-Struktur ungeeignet. Dagegen werden bei der Reduktion von VI mit Eisen(II)-salzen in Gegenwart einer wäßrigen Ammoniak-Lösung zu IIb einerseits infolge des alkalischen Mediums und darüber hinaus durch gleichzeitige Iminbildung im 2-Acyl-Rest zu erwartende intermolekulare Kondensationsreaktionen vermieden. Die hier beobachtet, bei Reduktionen von Verbindungen mit Nitrogruppen in Gegenwart von Carbonylgruppen mittels Eisen(II)-salzen und Ammoniak erfolgte Iminbildung, ist bisher in der Literatur nicht bekannt. Die Literatur lehrt, daß selbst Aldehydgruppen unter diesen Reaktionsbedingungen erhalten bleiben und kein Imin bilden (J. Org. Chem. *16,* 1736 (1951); J. Amer. Chem. Soc. *51,* 532 (1929); Org. Synth. *28,* 11 (1948)).

Als Eisensalze kommen Eisen(II)-sulfat, Eisen(II)-chlorid und Ferroammoniumsulfat in Betracht; vorzugsweise wird Eisen(II)-sulfat verwendet.

Die Reaktionstemperatur liegt zwischen 0°C und 100°C, vorzugsweise zwischen 50 und 100°C.

Als Lösungsmittel für die eingesetzten Nitroverbindungen der Formel VI kommen Alkohole, wie Methanol, Ethanol, Propanol, iso-Propanol, n-Butanol, iso-Butanol, Ketone, wie Aceton, Methylethylketon, oder Amide, wie Dimethylformamid, Formamid in Betracht. Auch Gemische dieser Lösungsmittel können verwendet werden. Die kristallin anfallenden Verbindungen der Formel IIb sind in verdünnten

Mineralsäuren sowie in stark alkalischem Medium stabil und stellen wertvolle Zwischenprodukte für die Cyclohexenonderivate der Formel I, in der $R^1$ und $R^4$ Wasserstoff bedeuten, zu deren Herstellung sowohl der Weg über die Reaktion an der Aminogruppe und anschließende Umsetzung zum Oximether als auch der Weg über die Oximetherbildung und anschließende Reaktion an der Aminogruppe beschritten werden kann:

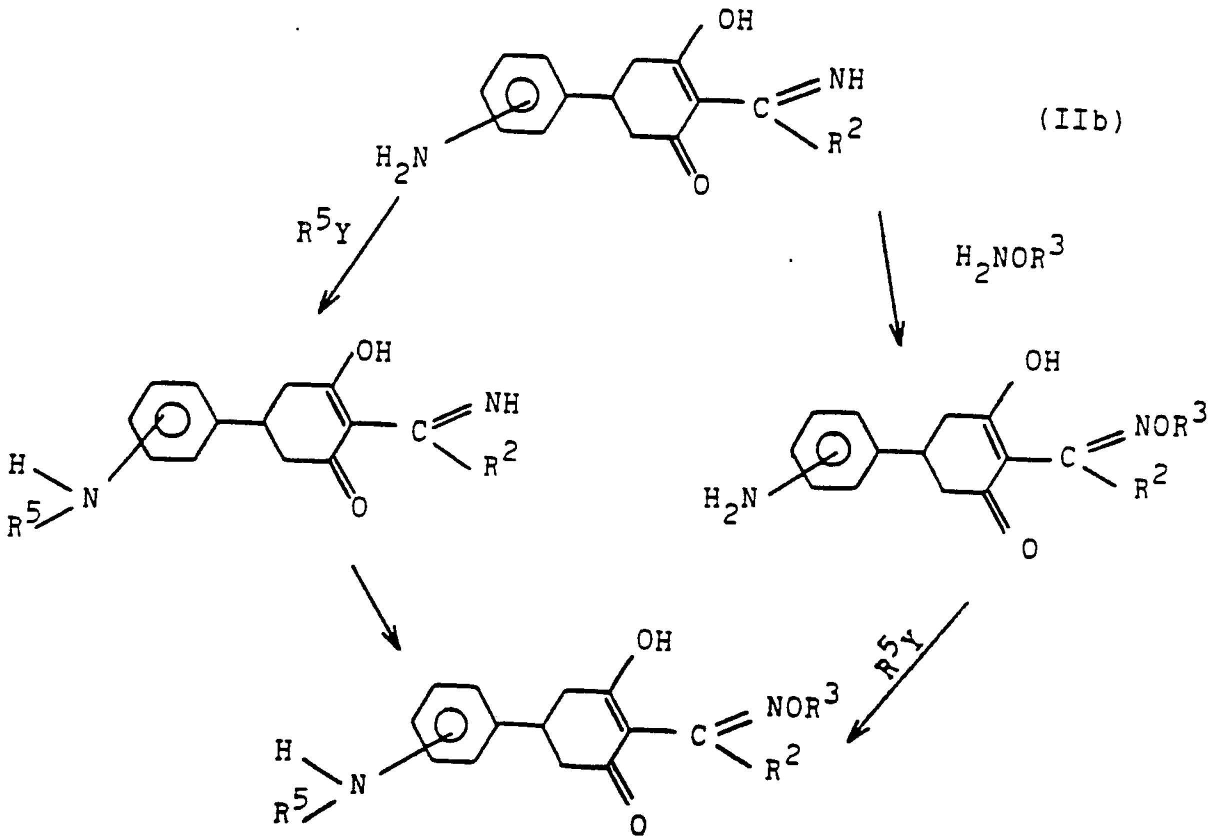


Die Herstellung von Verbindungen der Formel

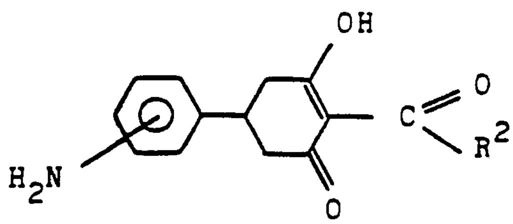

(IIc),

in der die Aminogruppe in meta- oder para-Position steht und $R^2$ Alkyl mit 1 bis 4 C-Atomen bedeutet, gelingt in analoger Weise zu den Iminoverbindungen der Formel IIb aus Nitroverbindungen VI, wobei in verdünnter Natronlauge anstatt in Ammoniak-Lösung unter ansonsten gleichen Bedingungen und Lösungsmittelzusätzen gearbeitet wird.

Die Verbindungen der Formel IIc können in bestimmten Fällen auch als salzartige schwerlösliche Verbindungen der Formel IId anfallen:

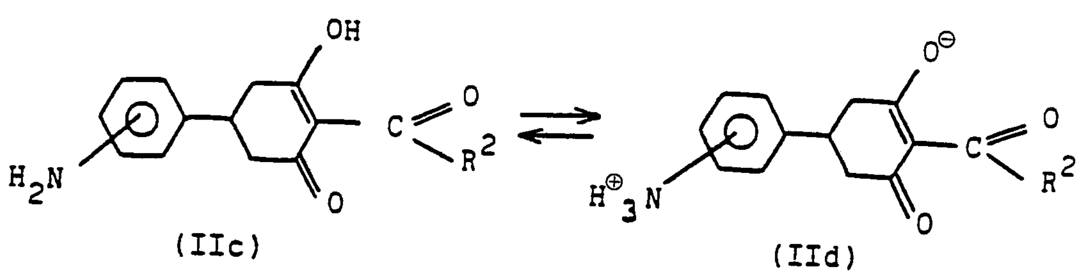

(IIc) (IId)

Die Verbindungen der Formel IIc bzw. IId können ebenfalls zur Herstellung von Cyclohexenonderivaten der Formel I, in der $R^1$ und $R^4$ Wasserstoff bedeuten, dienen

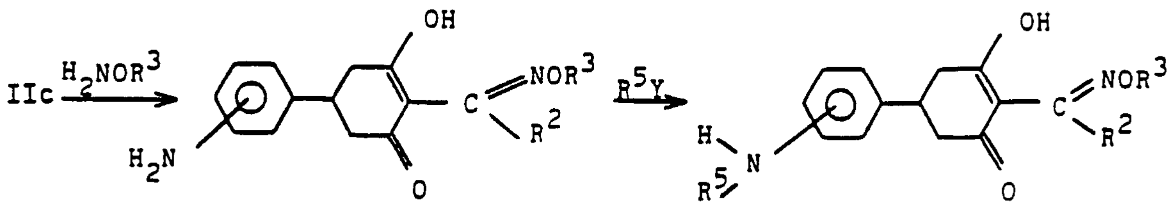


Ein weiteres Verfahren zur Reduktion der meta- oder para-Nitro-Verbindungen der Formel VI zu den entsprechenden Aminoverbindungen der Formel IIc stellt die katalytische Hydrierung mit Wasserstoff dar:

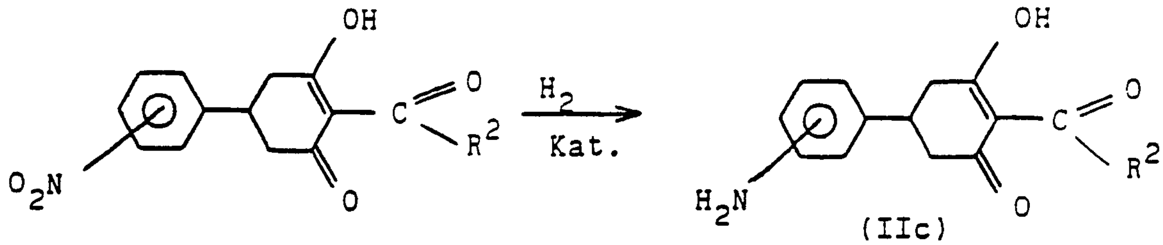


(IIc)

Hierbei wird gegebenenfalls in Gegenwart eines indifferenten Lösungsmittels wie z.B. Tetrahydrofuran, Dioxan, $C_1$ bis $C_4$-Alkohole, Ethylenglykolmonomethylether, Ethylenglykolmonoethylether, Dimethylformamid, Pyridin, Essigester, Aceton, Wasser oder Gemische dieser Lösungsmittel unter einem Druck zwischen 1 bis 5 bar, bevorzugt Normaldruck, unter Zugabe eines üblichen Hydrierkatalysators wie Palladium, Platin, Nickel bei Temperaturen zwischen 0 bis 80°C, bevorzugt Raumtemperatur, und notwendigerweise unter Zusatz von Basen wie wäßriger Natronlauge, tertiärer Amine, anorganischer Carbonate oder Acetate gearbeitet.

Mit dieser Methode lassen sich auch außerordentlich leicht meta- und para-nitro-substituierte Oximether der Formel

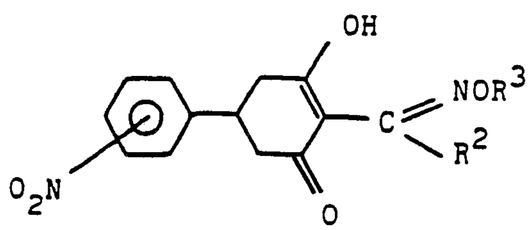

(V),

in der die Nitrogruppe in meta- oder para-Position steht und $R^2$ Alkyl mit 1 bis 4 C-Atomen und $R^3$ Alkyl mit 1 bis 4 C-Atomen bedeuten, in die Aminoderivate der Formel Ib überführen, die anschließend nach folgendem Reaktionsschema mit Säurechloriden oder Isocyanaten zu Cyclohexenonderivaten der Formel I, in der $R^1$ und $R^4$ Wasserstoff bedeuten, umgesetzt werden können:

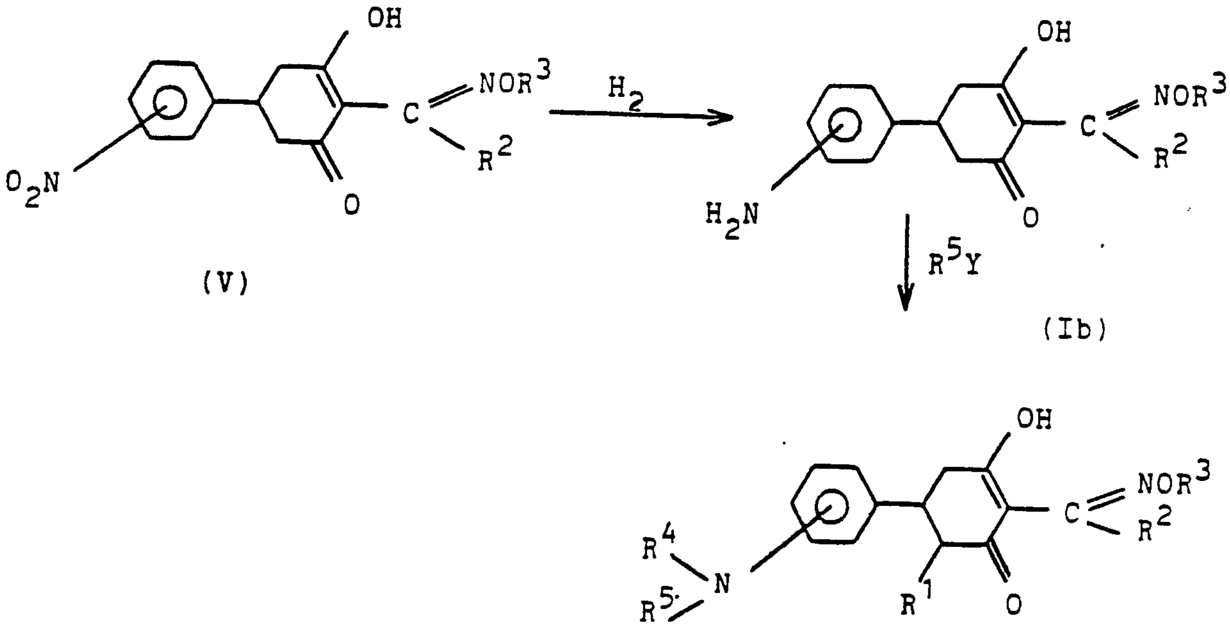


(V)

(Ib)

(I)

Das folgende Beispiel erläutert die Herstellung der Cyclohexenonderivate der Formel II.

5-(4-Aminophenyl)-2-(1-imino-n-butyl)-3-hydroxy-cyclohex-2-en-1-on

52 Gew.-Teile 5-(4-Nitrophenyl)-2-(butyryl-cyclohexan-1,3-dion werden in 1 000 Volumenteilen heißem, 75 %igem Ethanol gelöst und in eine siedende Lösung von 400 Teilen Eisen(II)-sulfatheptahydrat in 1 000 Teilen Wasser gegeben. Man rührt noch 15 Minuten nach, filtriert heiß und wäscht den Rückstand gut mit heißem Wasser aus. Beim Stehenlassen der Filtrate kristallisieren 37 Teile 5-(4-Aminophenyl)-2-(1-imino-n-butyl)-3-hydroxy-cyclohex-2-en-1-on vom Smp. 133°C aus.

| | | | |
|---|---|---|---|
| Ber. | C 70,5 | H 7,4 | N, 10,3 |
| Gef. | C, 69,7 | H 7,4 | N 9,8 |

Entsprechend lassen sich folgende Cyclohexenonderivate der Formel II herstellen:

| $-N\begin{smallmatrix}R^4\\R^5\end{smallmatrix}$ | $R^1$ | $R^2$ | X | Fp. [°C] |
|---|---|---|---|---|
| 3-Dimethylamino | H | $n-C_3H_7$ | O | |
| 4-Methylcarbamoyl | H | $n-C_3H_7$ | NH | > 200 |
| 4-Benzoyl | $COOCH_3$ | $n-C_3H_7$ | O | 108 - 110 |
| 4-Benzoyl | H | $n-C_3H_7$ | O | 160 - 162 |
| 3-Benzoyl | H | $n-C_3H_7$ | NH | > 200 |
| 4-Methylbenzoyl | H | $n-C_3H_7$ | NH | > 200 |
| 3-Amino | H | $C_2H_5$ | O | > 200 |
| 3-Amino | H | $C_2H_5$ | NH | |
| 4-Amino | H | $n-C_3H_7$ | NH | 166 |

Die folgenden Beispiele erläutern die Herstellung der Cyclohexenonderivate der Formel I. In den Beispielen verhalten sich Gewichtsteile zu Volumenteilen wie Kilogramm zu Liter.

Beispiel 1

2-(1-Allyloxyimino-n-butyl)-5-(4-amino-phenyl)-3-hydroxy-cyclohex-2-en-1-on

15 Gew.-Teile 5-(4-Aminophenyl)-2-(1-amino-butyliden)-cyclohexan-1,3-dion, 13,3 Gew.-Teile O-Allylhydroxylaminhydrochlorid, 10,2 Gew.-Teile Natriumhydrogencarbonat, 100 Volumenteile Methanol und 50 Volumenteile Methylenchlorid werden 16 Stunden bei 25°C gerührt, im Vakuum bei 30°C eingeengt und der Rückstand zwischen Wasser und Methylenchlorid verteilt. Die Methylenchloridphase wird mit Natriumsulfat getrocknet und weitgehend eingeengt. Durch Zugabe überschüssigen Petrolethers wird ein schwach gelber, kristalliner Feststoff bestehen aus 12,5 Gew.-Teilen 2-(1-Allyloxyimino-butyl)-5-(4-amino-phenyl)-3-hydroxycyclohex-2-en-1-on vom Smp. 92°C erhalten.

| | | | |
|---|---|---|---|
| Ber. | C 69,5 | H 7,4 | N, 8,6 |
| Gef. | C, 69,2 | H 7,2 | N 8,9 |

Beispiel 2

5-(4-Aminophenyl)-2-(1-ethoxyimino-n-butyl)-3-hydroxy-cyclohex-2-en-1-on

43 Gew.-Teile 2-(1-Ethoxyamino-n-butyliden)-5(4-nitrophenyl)-cyclohexan-1,3-dion in 1 000 Vol.-Teilen Tetrahydrofuran werden mit 5 Gew.-Teilen 10prozentigem Palladium auf Kohle versetzt und bei 30°C mit Wasserstoff begast, bis die theoretische Wasserstoffmenge aufgenommen wird. Nach dem Abfiltrieren wird eingeengt. Man erhält 37 Gew.-Teile hellbraun kristallines 5-(4-Aminophenyl)-2-(1-ethoxyimino-n-butyl)-3-hydroxy-cyclohex-2-en-1-on vom Smp. 118°C.

| | | | |
|---|---|---|---|
| Ber. | C 68,3 | H 7,6 | N, 8,8 |
| Gef. | C, 68,4 | H 7,4 | N 8,5 |

Beispiel 3

5-(3-Benzamidophenyl)-2-(1-ethoxyimino-n-butyl)-3-hydroxy-cyclohex-2-en-1-on

4,3 Gew.-Teile 5-(3-Benzamidophenyl)-2-(1-amino-n-buytliden)-cyclohexan-1,3-dion, 2,2 Gew.-Teile O-Ethylhydroxylammoniumchlorid, 1,9 Gew.-Teile Natriumhydrogencarbonat, 30 Vol.-Teile Methanol und 20 Teile Methylenchlorid werden 16 h bei Raumtemperatur gerührt, im Vakuum zur Trockene eingeengt und der Rückstand zwischen Wasser und Methylenchlorid verteilt. Die Methylenchloridphase wird mit Natriumsulfat getrocknet und eingeengt. Man erhält 3,5 Gew.-Teile 5-(3-Benzamidophenyl)-2-(1-ethoxyimino-butyl)-3-hydroxy-cyclohex-2-en-1-on vom Smp. 62 bis 64°C als hellgrauen kristallinen Feststoff.

| | | | |
|---|---|---|---|
| Ber. | C 71,4 | H 6,7 | N, 6,7 |
| Gef. | C, 70,9 | H 6,7 | N 7,1 |

Beispiel 4

5-[4-(4-Chlorbenzamido)-phenyl]-2-(1-ethoxyimino-n-butyl)-3-hydroxy-cyclo-hex-2-en-1-on

8 Gew.-Teile 5-(4-Aminophenyl)-2-(1-ethoxyimino-n-butyl)-3-hydroxy-cyclo-hex-2-en-1-on werden unter gelindem Erwärmen mit 40 Vol.-Teilen Eisessig und 30 Teilen gesättigter Natriumacetatlösung in Lösung gebracht. Unter Eiskühlung werden 4,4 Gew.-Teile 4-Chlorbenzoylchlorid zugetropft und nach 2 Stunden Rühren bei Raumtemperatur in Wasser gegossen. Der hellbraune Feststoff wird abfiltriert, mit Wasser ausgewaschen und im Vakuum bei 50°C über Natriumsulfat getrocknet. Man erhält 10,2 Gew.-Teile 5-[4-(4-Chlorbenzamido)-phenyl]-2-(1-ethoxyimino-n-butyl)-3-hydroxy-cyclo-hex-2-en-1-on vom Schmp. 155 bis 157°C als leicht gelbliches Pulver.

| | | | |
|---|---|---|---|
| Ber. | C 66,0 | H 6,0 | N, 6,1 |
| Gef. | C, 66,8 | H 6,1 | N 6,0 |

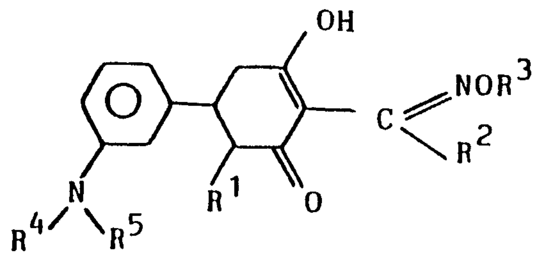

| Wirkstoff Nr. | $R^5$ | $R^1$ | $R^2$ | $R^3$ | $R^4$ | $n_D$/Fp [°C] |
|---|---|---|---|---|---|---|
| 1 | H | H | $n-C_3H_7$ | $C_2H_5$ | H | 129-130 |
| 2 | H | H | $C_2H_5$ | $C_2H_5$ | H | 1,5863 (24) |
| 3 | H | H | $C_2H_5$ | $CH_2-CH=CH_2$ | H | 1,5940 (27) |
| 4 | H | H | $n-C_3H_7$ | $CH_2-CH=CH_2$ | H | zähes Öl |
| 5 | H | H | $n-C_3H_7$ | $n-C_3H_7$ | H | 1,5640 (20) |
| 6 | H | H | $C_2H_5$ | $n-C_3H_7$ | H | |
| 7 | Methyl | H | $n-C_3H_7$ | $C_2H_5$ | $CH_3$ | 1.5705 (28) |
| 8 | Methyl | H | $n-C_3H_7$ | $CH_2-CH=CH_2$ | $CH_3$ | |
| 9 | Methyl | H | $C_2H_5$ | $CH_2-CH=CH_2$ | $CH_3$ | |
| 10 | Formyl | H | $n-C_3H_7$ | $C_2H_5$ | H | |
| 11 | Formyl | H | $n-C_3H_7$ | $CH_2-CH=CH_2$ | H | |
| 12 | Formyl | H | $C_2H_5$ | $CH_2-CH=CH_2$ | H | |
| 13 | Formyl | H | $C_2H_5$ | $C_2H_5$ | H | |
| 14 | Formyl | H | $n-C_3H_7$ | $CH_2-CH=CHCl$ | H | |
| 15 | Benzoyl | H | $n-C_3H_7$ | $C_2H_5$ | H | 62 - 64 |
| 16 | Benzoyl | H | $n-C_3H_7$ | $CH_2-CH=CH_2$ | H | |
| 17 | Benzoyl | H | $C_2H_5$ | $CH_2-CH=CH_2$ | H | |
| 18 | Benzoyl | H | $C_2H_5$ | $C_2H_5$ | H | |
| 19 | 3-Nitrobenzoyl | H | $n-C_3H_7$ | $C_2H_5$ | H | |
| 20 | 3-Nitrobenzoyl | H | $n-C_3H_7$ | $CH_2-CH=CH_2$ | H | |

| Wirkstoff Nr. | $R^5$ | $R^1$ | $R^2$ | $R^3$ | $R^4$ | $n_D$/Fp [°C] |
|---|---|---|---|---|---|---|
| 21 | 3-Nitrobenzoyl | H | $C_2H_5$ | $CH_2-CH=CH_2$ | H | |
| 22 | 3-Nitrobenzoyl | H | $C_2H_5$ | $C_2H_5$ | H | 70 – 74 |
| 23 | 2-Chlorbenzoyl | H | $C_2H_5$ | $C_2H_5$ | H | 74 – 77 |
| 24 | 2-Chlorbenzoyl | H | $n-C_3H_7$ | $CH_2-CH=CH_2$ | H | 66 – 69 |
| 25 | 3-Methoxybenzoyl | H | $n-C_3H_7$ | $C_2H_5$ | H | |
| 26 | 3-Methoxybenzoyl | H | $n-C_3H_7$ | $CH_2-CH=CH_2$ | H | |
| 27 | 3-Methoxybenzoyl | H | $C_2H_5$ | $CH_2-CH=CH_2$ | H | |
| 28 | 3-Methoxybenzoyl | H | $C_2H_5$ | $C_2H_5$ | H | |
| 29 | 4-Methylbenzoyl | H | $n-C_3H_7$ | $C_2H_5$ | H | 58 – 61 |
| 30 | 4-Methylbenzoyl | H | $n-C_3H_7$ | $CH_2-CH=CH_2$ | H | |
| 31 | 4-Methylbenzoyl | H | $C_2H_5$ | $CH_2CH=CH_2$ | H | |
| 32 | 4-Methylbenzoyl | H | $C_2H_5$ | $C_2H_5$ | H | 72 – 76 |
| 33 | 4-n-Propoxybenzoyl | H | $n-C_3H_7$ | $C_2H_5$ | H | |
| 34 | 4-t-Butylbenzoyl | H | $C_2H_5$ | $C_2H_5$ | H | 91 – 92 |
| 35 | 4-Nitrobenzoyl | H | $n-C_3H_7$ | $C_2H_5$ | H | 83 – 84 |
| 36 | 4-Nitrobenzoyl | H | $n-C_3H_7$ | $CH_2CH=CH_2$ | H | |
| 37 | 4-Nitrobenzoyl | H | $C_2H_5$ | $CH_2-CH=CH_2$ | H | |
| 38 | 4-Nitrobenzoyl | H | $C_2H_5$ | $C_2H_5$ | H | 76 – 78 |
| 39 | 4-Chlorbenzoyl | H | $n-C_3H_7$ | $C_2H_5$ | H | 107 – 110 |
| 40 | 4-Chlorbenzoyl | H | $n-C_3H_7$ | $CH_2-CH=CH_2$ | H | |
| 41 | 4-Chlorbenzoyl | H | $C_2H_5$ | $CH_2-CH=CH_2$ | H | |
| 42 | 4-Chlorbenzoyl | H | $C_2H_5$ | $C_2H_5$ | H | |
| 43 | 4-Methoxybenzoyl | H | $n-C_3H_7$ | $C_2H_5$ | H | |
| 44 | 4-Methoxybenzoyl | H | $n-C_3H_7$ | $CH_2-CH=CH_2$ | H | |
| 45 | 4-Methoxybenzoyl | H | $C_2H_5$ | $CH_2-CH=CH_2$ | H | 55 – 58 |
| 46 | 4-Methoxybenzoyl | H | $C_2H_5$ | $C_2H_5$ | H | 68 – 71 |

| Wirkstoff Nr. | $R^5$ | $R^1$ | $R^2$ | $R^3$ | $R^4$ | $n_D$/Fp [°C] |
|---|---|---|---|---|---|---|
| 47 | Phenoxycarbonyl | H | $n-C_3H_5$ | $C_2H_5$ | H | |
| 48 | Phenoxycarbonyl | H | $n-C_3H_7$ | $CH_2-CH=CH_2$ | H | |
| 49 | Phenoxycarbonyl | H | $C_2H_5$ | $CH_2-CH=CH_2$ | H | |
| 50 | Phenoxycarbonyl | H | $C_2H_5$ | $C_2H_5$ | H | 50 - 52 |
| 51 | Methylthiocarbonyl | H | $n-C_3H_7$ | $C_2H_5$ | H | |
| 52 | Methylthiocarbonyl | H | $n-C_3H_7$ | $CH_2-CH=CH_2$ | H | |
| 53 | Methylthiocarbonyl | H | $C_2H_5$ | $CH_2-CH=CH_2$ | H | |
| 54 | Methylthiocarbonyl | H | $C_2H_5$ | $C_2H_5$ | H | 84 - 86 |
| 55 | Ethylthiocarbonyl | H | $n-C_3H_7$ | $C_2H_5$ | H | |
| 56 | Ethylthiocarbonyl | H | $n-C_3H_7$ | $CH_2-CH=CH_2$ | H | |
| 57 | Ethylthiocarbonyl | H | $C_2H_5$ | $CH_2-CH=CH_2$ | H | |
| 58 | Ethylthiocarbonyl | H | $C_2H_5$ | $C_2H_5$ | H | |
| 59 | Isopropylthiocarbonyl | H | $n-C_3H_7$ | $C_2H_5$ | H | |
| 60 | Isopropylthiocarbonyl | H | $n-C_3H_7$ | $CH_2-CH=CH_2$ | H | |
| 61 | Isopropylthiocarbonyl | H | $C_2H_5$ | $CH_2-CH=CH_2$ | H | |
| 62 | Isopropylthiocarbonyl | H | $C_2H_5$ | $C_2H_5$ | H | 100-102 |
| 63 | N,N-Dimethylcarbamoyl | H | $n-C_3H_7$ | $C_2H_5$ | H | 116-123 |
| 64 | N,N-Dimethylcarbamoyl | H | $n-C_3H_7$ | $CH_2-CH=CH_2$ | H | |
| 65 | N,N-Dimethylcarbamoyl | H | $C_2H_5$ | $CH_2-CH=CH_2$ | H | |
| 66 | N,N-Dimethylcarbamoyl | H | $C_2H_5$ | $C_2H_5$ | H | |
| 67 | N,N-Di-n-butylcarbamoyl | H | $n-C_3H_7$ | $C_2H_5$ | H | 175-180 |
| 68 | N,N-Di-n-butylcarbamoyl | H | $n-C_3H_7$ | $CH_2-CH=CH_2$ | H | |
| 69 | N,N-Di-n-butylcarbamoyl | H | $C_2H_5$ | $CH_2-CH=CH_2$ | H | |
| 70 | N,N-Di-n-butylcarbamoyl | H | $C_2H_5$ | $C_2H_5$ | H | |
| 71 | N-Methylcarbamoyl | H | $n-C_3H_7$ | $C_2H_5$ | H | 76 - 78 |
| 72 | N-Methylcarbamoyl | H | $n-C_3H_7$ | $CH_2CH=CH_2$ | H | |

| Wirkstoff Nr. | $R^5$ | $R^1$ | $R^2$ | $R^3$ | $R^4$ | $n_D$/Fp [°C] |
|---|---|---|---|---|---|---|
| 73 | N-Methylcarbamoyl | H | $C_2H_5$ | $CH_2-CH=CH_2$ | H | |
| 74 | N-Methylcarbamoyl | H | $C_2H_5$ | $C_2H_5$ | H | |
| 75 | N-n-Propylcarbamoyl | H | n-$C_3H_7$ | $C_2H_5$ | H | 114-116 |
| 76 | N-n-Propylcarbamoyl | H | n-$C_3H_7$ | $CH_2-CH=CH_2$ | H | |
| 77 | N-n-Propylcarbamoyl | H | $C_2H_5$ | $CH_2-CH=CH_2$ | H | |
| 78 | N-n-Propylcarbamoyl | H | $C_2H_5$ | $C_2H_5$ | H | |
| 79 | N-Methoxy-N-methylcarbamoyl | H | n-$C_3H_7$ | $C_2H_5$ | H | |
| 80 | N-Methoxy-N-methylcarbamoyl | H | n-$C_3H_7$ | $CH_2-CH=CH_2$ | H | |
| 81 | N-Methoxy-N-methylcarbamoyl | H | $C_2H_5$ | $CH_2-CH=CH_2$ | H | |
| 82 | N-Methoxy-N-methylcarbamoyl | H | $C_2H_5$ | $C_2H_5$ | H | |
| 83 | N-Methoxy-N-isopropylcarbamoyl | H | n-$C_3H_7$ | $C_2H_5$ | H | |
| 84 | N-Methoxy-N-isopropylcarbamoyl | H | n-$C_3H_7$ | $CH_2-CH=CH_2$ | H | |
| 85 | N-Methoxy-N-isopropylcarbamoyl | H | $C_2H_5$ | n-$C_3H_7$ | H | |
| 86 | N-Methoxy-N-isopropylcarbamoyl | H | $C_2H_5$ | $C_2H_5$ | H | 118-125 |
| 87 | N,N-Dimethylsulfamoyl | H | n-$C_3H_7$ | $C_2H_5$ | H | |
| 88 | N,N-Dimethylsulfamoyl | H | n-$C_3H_7$ | $CH_2-CH=CH_2$ | H | |
| 89 | N,N-Dimethylsulfamoyl | H | $C_2H_5$ | $CH_2-CH=CH_2$ | H | |
| 90 | N,N-Dimethylsulfamoyl | H | $C_2H_5$ | $C_2H_5$ | H | |
| 91 | N,N-Diethylsulfamoyl | H | n-$C_3H_7$ | $C_2H_5$ | H | |
| 92 | N,N-Diethylsulfamoyl | H | n-$C_3H_7$ | $CH_2-CH=CH_2$ | H | |
| 93 | N,N-Diethylsulfamoyl | H | $C_2H_5$ | $CH_2-CH=CH_2$ | H | |
| 94 | N,N-Diethylsulfamoyl | H | $C_2H_5$ | $C_2H_5$ | H | |
| 95 | Wasserstoff | H | n-$C_3H_7$ | $C_2H_5$ | H | 118 |
| 96 | Wasserstoff | H | $C_2H_5$ | n-$C_3H_7$ | H | |
| 97 | Wasserstoff | H | $C_2H_5$ | $CH_2-CH=CH_2$ | H | |

| Wirkstoff Nr. | $R^5$ | $R^1$ | $R^2$ | $R^3$ | $R^4$ | $n_D$/Fp [°C] |
|---|---|---|---|---|---|---|
| 98 | Wasserstoff | H | $n-C_3H_7$ | $CH_2-CH=CH_2$ | H | 92 |
| 99 | Wasserstoff | H | $n-C_3H_7$ | $CH_2-CH=CHCl$ | H | |
| 100 | Methyl | $COOCH_3$ | $n-C_3H_7$ | $C_2H_5$ | $CH_3$ | 80 |
| 101 | Methyl | $COOCH_3$ | $n-C_3H_7$ | $CH_2-CH=CH_2$ | $CH_3$ | 74 |
| 102 | Methyl | H | $C_2H_5$ | $CH_2-CH=CH_2$ | $CH_3$ | |
| 103 | Methyl | H | $n-C_3H_7$ | $C_2H_5$ | $CH_3$ | |
| 104 | Benzoyl | H | $n-C_3H_7$ | $C_2H_5$ | H | 161-164 |
| 105 | Benzoyl | H | $n-C_3H_7$ | $CH_2-CH=CH_2$ | H | 134-135 |
| 106 | Benzoyl | H | $C_2H_5$ | $CH_2-CH=CH_2$ | H | |
| 107 | Benzoyl | H | $C_2H_5$ | $C_2H_5$ | H | 147 |
| 108 | 3-Nitrobenzoyl | H | $n-C_3H_7$ | $C_2H_5$ | H | 80 - 81 |
| 109 | 3-Nitrobenzoyl | H | $n-C_3H_7$ | $CH_2CH=CH_2$ | H | |
| 110 | 3-Nitrobenzoyl | H | $C_2H_5$ | $CH_2-CH=CH_2$ | H | |
| 111 | 3-Nitrobenzoyl | H | $C_2H_5$ | $C_2H_5$ | H | |
| 112 | 2-Chlorbenzoyl | H | $n-C_3H_7$ | $C_2H_5$ | H | 98 -101 |
| 113 | 2-Chlorbenzoyl | H | $n-C_3H_7$ | $CH_2-CH=CH_2$ | H | |
| 114 | 3-Methoxybenzoyl | H | $n-C_3H_7$ | $C_2H_5$ | H | |
| 115 | 3-Methoxybenzoyl | H | $n-C_3H_7$ | $CH_2-CH=CH_2$ | H | |
| 116 | 3-Methoxybenzoyl | H | $C_2H_5$ | $CH_2-CH=CH_2$ | H | |
| 117 | 3-Methoxybenzoyl | H | $C_2H_5$ | $C_2H_5$ | H | |
| 118 | 4-n-Propoxybenzoyl | H | $n-C_3H_7$ | $C_2H_5$ | H | |
| 119 | 4-t-Butylbenzoyl | H | $n-C_3H_7$ | $C_2H_5$ | H | 78 - 79 |
| 120 | 4-Nitrobenzoyl | H | $n-C_3H_7$ | $C_2H_5$ | H | 138 -141 |
| 121 | 4-Nitrobenzoyl | H | $n-C_3H_7$ | $CH_2CH=CH_2$ | H | |
| 122 | 4-Nitrobenzoyl | H | $C_2H_5$ | $CH_2-CH=CH_2$ | H | |

| Wirkstoff Nr. | $R^5$ | $R^1$ | $R^2$ | $R^3$ | $R^4$ | $n_D$/Fp [°C] |
|---|---|---|---|---|---|---|
| 123 | 4-Nitrobenzoyl | H | $C_2H_5$ | $C_2H_5$ | H | |
| 124 | 4-Chlorbenzoyl | H | $n-C_3H_7$ | $C_2H_5$ | H | 174 -182 |
| 125 | 4-Chlorbenzoyl | H | $n-C_3H_7$ | $CH_2-CH=CH_2$ | H | |
| 126 | 4-Chlorbenzoyl | H | $C_2H_5$ | $CH_2-CH=CH_2$ | H | |
| 127 | 4-Chlorbenzoyl | H | $C_2H_5$ | $C_2H_5$ | H | |
| 128 | 4-Methoxybenzoyl | H | $n-C_3H_7$ | $C_2H_5$ | H | |
| 129 | 4-Methoxybenzoyl | H | $n-C_3H_7$ | $CH_2-CH=CH_2$ | H | 145-153 |
| 130 | 4-Methoxybenzoyl | H | $C_2H_5$ | $CH_2-CH=CH_2$ | H | |
| 131 | 4-Methoxybenzoyl | H | $C_2H_5$ | $C_2H_5$ | H | |
| 132 | Phenoxycarbonyl | H | $n-C_3H_7$ | $C_2H_5$ | H | 141-146 |
| 133 | Phenoxycarbonyl | H | $n-C_3H_7$ | $CH_2-CH=CH_2$ | H | |
| 134 | Phenoxycarbonyl | H | $C_2H_5$ | $CH_2-CH=CH_2$ | H | |
| 135 | Phenoxycarbonyl | H | $C_2H_5$ | $C_2H_5$ | H | |
| 136 | Methylthiocarbonyl | H | $n-C_3H_7$ | $C_2H_5$ | H | 165-166 |
| 137 | Methylthiocarbonyl | H | $n-C_3H_7$ | $CH_2-CH=CH_2$ | H | |
| 138 | Methylthiocarbonyl | H | $C_2H_5$ | $CH_2-CH=CH_2$ | H | |
| 139 | Methylthiocarbonyl | H | $C_2H_5$ | $C_2H_5$ | H | |
| 140 | Ethylthiocarbonyl | H | $n-C_3H_7$ | $C_2H_5$ | H | |
| 141 | Ethylthiocarbonyl | H | $n-C_3H_7$ | $CH_2-CH=CH_2$ | H | |
| 142 | Ethylthiocarbonyl | H | $C_2H_5$ | $CH_2-CH=CH_2$ | H | |
| 143 | Ethylthiocarbonyl | H | $C_2H_5$ | $C_2H_5$ | H | |
| 144 | Isopropylthiocarbonyl | H | $n-C_3H_7$ | $C_2H_5$ | H | |
| 145 | Isopropylthiocarbonyl | H | $n-C_3H_7$ | $CH_2-CH=CH_2$ | H | |
| 146 | Isopropylthiocarbonyl | H | $C_2H_5$ | $CH_2-CH=CH_2$ | H | |
| 147 | Isopropylthiocarbonyl | H | $C_2H_5$ | $C_2H_5$ | H | |

| Wirkstoff Nr. | $R^5$ | $R^1$ | $R^2$ | $R^3$ | $R^4$ | $n_D$/Fp [°C] |
|---|---|---|---|---|---|---|
| 148 | N,N-Dimethylsulfamoyl | H | n-$C_3H_7$ | $C_2H_5$ | H | |
| 149 | N,N-Dimethylsulfamoyl | H | n-$C_3H_7$ | $CH_2-CH=CH_2$ | H | |
| 150 | N,N-Dimethylsulfamoyl | H | $C_2H_5$ | $CH_2-CH=CH_2$ | H | |
| 151 | N,N-Dimethylsulfamoyl | H | $C_2H_5$ | $C_2H_5$ | H | |
| 152 | N,N-Diethylsulfamoyl | H | n-$C_3H_7$ | $C_2H_5$ | H | |
| 153 | N,N-Diethylsulfamoyl | H | n-$C_3H_7$ | $CH_2-CH=CH_2$ | H | |
| 154 | N,N-Diethylsulfamoyl | H | $C_2H_5$ | $CH_2-CH=CH_2$ | H | |
| 155 | N,N-Diethylsulfamoyl | H | $C_2H_5$ | $C_2H_5$ | H | |
| 156 | Benzoyl | H | n-$C_3H_7$ | n-$C_3H_7$ | H | 59 |
| 157 | Benzoyl | H | n-$C_3H_7$ | $CH_2-CH=CH-Cl$ | H | 124 - 125 |
| 158 | Benzoyl | H | n-$C_3H_7$ | $CH_2-C\equiv CH$ | H | 126 - 127 |
| 159 | Benzoyl | H | n-$C_3H_7$ | $CH_2-CCl=CCl_2$ | H | |
| 160 | Benzoyl | H | $C_2H_5$ | n-$C_3H_7$ | H | |
| 161 | Benzoyl | H | $C_2H_5$ | $CH_2-CH=CH-Cl$ | H | |
| 162 | Benzoyl | H | $C_2H_5$ | $CH_2-C=CH$ | H | |
| 163 | $CH_3$ | H | n-$C_3H_7$ | Allyl | $CH_3$ | |
| 164 | $C_2H_5$ | H | n-$C_3H_7$ | Allyl | $C_2H_5$ | |
| 165 | $C_2H_5$ | H | n-$C_3H_7$ | $C_2H_5$ | $C_2H_5$ | |
| 166 | 2,4,6-Trimethyl-benzoyl | H | n-$C_3H_7$ | $C_2H_5$ | H | |
| 167 | 2,4-Dichlor-benzoyl | H | n-$C_3H_7$ | $C_2H_5$ | H | |
| 168 | 2-Fluor-benzoyl | H | $C_2H_5$ | $C_2H_5$ | H | |
| 169 | 4-Fluor-benzoyl | H | $C_2H_5$ | $C_2H_5$ | H | |
| 170 | 2-Iod-benzoyl | H | $C_2H_5$ | $C_2H_5$ | H | |
| 171 | 2,6-Dichlor-benzoyl | H | $C_2H_5$ | $C_2H_5$ | H | |
| 172 | Benzoyl | H | n-$C_3H_7$ | $C_2H_5$ | H | Natriumsalz |
| 173 | n-Propylthiocarbonyl | H | $C_2H_5$ | $C_2H_5$ | H | |

| Wirkstoff Nr. | $R^5$ | $R^1$ | $R^2$ | $R^3$ | $R^4$ | $n_D$/Fp [°C] |
|---|---|---|---|---|---|---|
| 174 | Benzoyl | H | n-$C_3H_7$ | $C_2H_5$ | H | Natriumsalz > 200 |
| 175 | Benzoyl | H | n-$C_3H_7$ | $C_2H_5$ | H | Kaliumsalz > 200 |
| 176 | Benzoyl | H | n-$C_3H_7$ | $C_2H_5$ | H | Bariumsalz 190 (Zers.) |
| 177 | Benzoyl | H | n-$C_3H_7$ | $C_2H_5$ | H | Kupfersalz 190-200 |
| 178 | Benzoyl | H | n-$C_3H_7$ | $C_2H_5$ | H | Triethylbenzyl-ammoniumsalz 116-120 |

$^1$H-NMR-spektroskopische Daten:

Chemische Verschiebung in δ-Werten [ppm] in $CDCl_3$, bezogen auf Tetramethylsilan als internen Standard (s = Singulett, d = Dublett, t = Triplett, q = Quartett, m = Multiplett)

| Wirkstoff Nr. | Charakteristische Signale |
|---|---|
| 1 | 0,98 (t, 3H); 1,22 (t, 3H); 1,59 (q, 2H); 2,73 (s, 4H); 2,96 (t, 2H); 3,25 (m, 1H), 4,12 (q, 2H); 6,62 (m, 3H); 7,14 (t, 1H) 6,94 (d, 1H); 7,23 (dd, 1H) |
| 10 | 7,03 (m), 7,41 (m), 8,17 (m), 8,4 (s), 8,72 (d); 6 H-Atome |
| 18 | 7,01 (m, 1H); 7,16 (t, 1H); 7,23 (m, 4H); 7,31 (s, 1H); 7,94 (d, 2H) |
| 79 | 3,13 (s, 3H); 3,71 (s, 3H); 4,08 (q, 2H) |
| 82 | 1,21 (d, 6H); 3,83 (s, 3H); 4,17 (q, 2H); 4,44 (m, 1H) |
| 83 | 1,17 (d, 6H); 3,73 (s, 3H); 4,05 (m, 4H) |
| 85 | 1,21 (d, 6H); 2,96 (m, 2H); 3,79 (s, 3H); 4,02 (t, 2H); 4,43 (m, 1H) |
| 90 | 1,17 (t, 3H); 1,34 (t, 3H); 2,86 (s, $CH_3N$), 3,34 (m, 1H); 4,15 (q, 2H) |
| 94 | 1,0-1,5 (m, 12H); 3,30 (q, 4H); 4,16 (q, 2H), 7,05 (m, 3H); 7,28 (m, 1H) |
| 95 | 0,97 (t, 3H); 1,31 (t, 3H); 1,58 (m, 2H); 2,7 (4H), 2,94 (t, 2H); 3,23 (m, 1H); 4,12 (q, 2H); 6,67 (d, 2H); 7,02 (d, 2H) |
| 104 | 0,98 (t, 3H); 1,33 (t, 3H); 1,58 (m, 2H); 2,74 (4H); 2,96 (t, 2H); 3,33 (m, 1H); 4,12 (q, 2H); 7,24 (d, 2H); 7,51 (m, 3H); 7,63 (d, 2H); 7,87 (d, 2H); 7,91 (s, NH) |
| 105 | 0,97 (t, 3H); 1,61 (m, 2H); 4,57 (d, 2H); 5,3-5,5 (2H); 5,99 (m, 1H) |
| 107 | 1,13 (t, 3H); 1,30 (t, 3H); 7,13 (d, 2H); 7,45 (m, 3H); 7,57 (d, 2H); 7,81 (m, 2H) |
| 136 | 2,42 (s, 3H); 4,10 (q, 2H); 7,18 (d, 2H); 7,32 (s, NH); 7,42 (d, 2H) |
| 148 | 2,84 (s, 6H, $CH_3N$); 4,12 (q, 2H); 7,18 (s, 4H) |
| 151 | 1,17 (t, 3H); 1,33 (t, 3H); 2,83 (s, $CH_3N$); 3,22 (m, 1H); 4,15 (q, 2H); 7,19 (s, 4H) |
| 152 | 0,97 (t, 3H); 1,07 (t, 6H); 1,33 (t, 3H); 3,27 (q, 4H); 4,11 (q, 2H); 7,15 (s, 4H) |
| 157 | 0,97 (t, 3H); 1,56 (q, 2H); 3,32 (m, 1H); 4,54, 478 (d,d, 2H); 6,05 (m, 1H); 6,34 (m, 1H) |
| 158 | 4,67 (s, 2H); 7,21 (d, 2H); 7,50 (m, 3H), 7,62 (d, 2H); 7,87 (d, 2H); 8,12 (s, NH) |

Die Cyclohexenonderivate der Formel I und ihre Salze bzw. die sie enthaltenden herbiziden Mittel können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, wie z.B. Dimethylformamid, Dimethylsulfoxid, N-Methylpyrrolidon, Wasser, in Betracht.

Wäßrige Anwendungsformen können aus Emulsionskonzentration, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldeyd, Kondensationsprodukte des Naphthalins bzw. der Naphthalinsulfonsäuren mit Phenol und Formaldehyd, Polyoxyethylenoctylphenoläther, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoltheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an festen Trägerstoffen hergestellt werden. Feste Trägerstoffe sind Mineralerden wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nüßschalenmehl, Cellulosepulver und andere feste Trägerstoffe.

Die Formulierungen enthalten zwischen 0,1 und 95 Gewichtsprozent, vorzugsweise zwischen 0,5 und 90 Gewichtsprozent, Wirkstoff.

Beispiele für Formulierungen sind:

I. Man vermischt 90 Gewichtsteile der Verbindung Nr. 2 mit 10 Gewichtsteilen N-Methyl-alphapyrrolidon und erhält eine Lösung, die zur Anwendung in Form kleinster Tropfen geeignet ist.

II. 20 Gewichtsteile der Verbindung Nr. 3 werden in einer Mischung gelöst, die aus 80 Gewichtsteilen Xylol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Dodecylbenzolsulfonsäure und 5 Gewichtsteile des Anlagerungsproduktes von 40 Mol Ethylenoxid an 1 Mol Ricinusöl besteht. Durch Ausgießen und feines Verteilen der Lösung in 100 000 Gewichtsteilen Wasser erhält man eine wäßrige Dispersion, die 0,02 Gewichtsprozent des Wirkstoffs enthält.

III. 20 Gewichtsteile der Verbindung Nr. 1 werden in einer Mischung gelöst, die aus 40 Gewichtsteilen Cyclohexanon, 30 Gewichtsteilen Isobutanol, 20 Gewichtsteilen des Anlagerungsproduktes von 7 Mol Ethylenoxid an 1 Mol Isooctylphenol und 10 Gewichtsteile des Anlagerungprodukte von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

Die Applikation kann in Vorauflauf- oder in Nachauflaufverfahren erfolgen. Sind die Wirkstoffe bei Nachauflaufanwendung für gewisse Kulturpflanzen weniger verträglich, so können auch Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die Aufwandmengen an Wirkstoff betragen je nach Jahreszeit, Zielpflanzen und Wachstumsstadium

0,025 bis 3 kg/ha, vorzugsweise 0,1 bis 0,5 kg/ha.

Die Wirkung der Cyclohexenonderivate der Formel I auf das Pflanzenwachstum läßt sich durch Gewächshausversuche zeigen:

Als Kulturgefäße dienen Plastikblumentöpfe mit 300 $cm^3$ Inhalt und lehmigem Sand mit etwa 3% Humus als Substrat. Die Samen der Testpflanzen werden nach Arten getrennt flach eingesät. Bei Vorauflaufbehandlung werden die Wirkstoffe unmittelbar danach auf die Erdoberfläche aufgebracht. Sie werden hierbei in Wasser als Verteilungsmittel suspendiert oder emulgiert und mittels fein verteilender Düsen gespritzt. Die Aufwandmengen betragen 3,0 kg/ha.

Nach dem Aufbringen der Mittel werden die Gefäße leicht beregnet, um Keimung und Wachstum in Gang zu bringen. Danach deckt man die Gefäße mit durchsichtigen Plastikhauben ab, bis die Pflanzen angewachsen sind. Diese Abdeckung bewirkt ein gleichmäßiges Keimen der Testpflanzen, sofern dies nicht durch die Wirkstoffe beeinträchtigt wird.

Zum Zwecke der Nachauflaufbehandlung zieht man die Testpflanzen je nach Wuchsform erste bis zu einer Wuchshöhe von 3 bis 15 cm an und behandelt sie danach. Die Sojapflanzen werden in einem mit Torfmull (peat) angereicherten Substrat angezogen. Zur Nachauflaufbehandlung werden entweder direkt gesäte und in den gleichen Gefäßen aufgewachsene Pflanzen ausgewählt, oder sie werden erst als Keimpflanzen getrennt angezogen und einige Tage vor der Behandlung in die Versuchgefäße verpflanzt. Die Aufwandmengen für die Nachauflaufbehandlung betragen 0,25 , 0,5 1,0 bzw. 3,0 kg Wirkstoff/ha.

Die Versuchgefäße werden im Gewächshaus aufgestellt, wobei für wärmeliebende Arten wärmere Bereiche (20 bis 35°C) und für solche gemäßigter Klimate 10 bis 25°C bevorzugt werden. Die Versuchsperiode erstreckt sich über 3 bis 4 Wochen. Während dieser Zeit werden die Pflanzen gepflegt und ihre Reaktion auf die einzelnen Behandlungen wird ausgewertet. Bewertet wird nach einer Skala von 0 bis 100. Dabei bedeutet 100 kein Aufgang der Pflanzen bzw. völlige Zerstörung zumindest der oberirdischen Teile.

Die in den Gewächshausversuchen verwendeten Pflanzen setzen sich aus folgenden Arten zusammen:

Alopecurus myosuroides (Ackerfuchsschwanz), Avena fatua (Flughafer), Brassica napus (Raps), Digitaria sanguinalis (Blutfingerhirse), Echinochloa crus-galli (Hühnerhirse), Glycine max. (Sojabohnen), Hordeum vulgare (Gerste), Leptochloa fascicularis, Lolium multiflorum (Ital. Raygras), Oryza sativa (Reis), Setaria faberii (Borstenhirse), Setaria italica (Kolbenhirse), Sinapis alba (weißer Senf), Sorghum halepense (Sudangras), Triticum aestivum (Weizen), Zea mays (Mais).

Als Vergleichsmittel dienen die aus der DE—A 32 48 554 bekannten Verbindungen der Formel

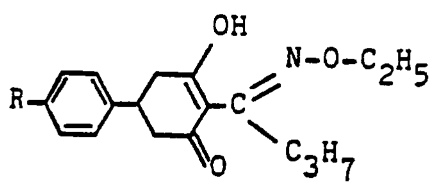

R = 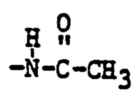 (A) und R = 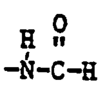 (B).

Die Testergebnisse zeigen folgende Wirkungsrichtungen der Cyclohexenonderivate der Formel I:

a) Aktivität gegen Pflanzenarten aus der Familie der Gräser und gleichzeitig ausgezeichnete Verträglichkeit für breitblättrige Pflanzen,

b) Wirkung gegen spezielle unerwünschte Gräser bei gleichzeitiger Selektivität auch für Kulturen aus der Familie der Gräser,

c) gleichzeitige Wirkung sowohl gegen grasartige als auch breitblättrige unerwünschte Pflanzen und

d) Wirkung gegen breitblättrige unerwünschte Unkräuter und gleichzeitige Verträglichkeit für grasartige Kulturpflanzen.

Vorauflaufanwendung:

Bei Vorauflaufanwendung erweisen sich beispielsweise die Verbindungen Nr. 169, 173, 90, 85, 50, 95, 156, 105 als herbizid wirksam gegen Pflanzen aus der Familie der Gräser, während weißer Senf (Sinapis alba), ein dikotyler Kreuzblütler (Cruciferae), völlig ungeschädigt bleibt.

Nachauflaufanwendung:

Bei Nachauflaufanwendung von Verbindung Nr. 104 werden mit 0,5 kg Wirkstoff/ha grasartige unerwünschte Pflanzen selektiv in der Kulturpflanze Reis, die ebenfalls zur Gräserfamilie zählt, bekämpft. Das bekannte Vergleichsmittel A schädigt dagegen die Reiskultur unannehmbar stark. Verbindung Nr. 104 bekämpft ebenfalls grasartige unerwünschte Pflanzen, ohne breitblättrige Kulturpflanzen zu schädigen.

Die Verbindungen Nr. 54, 62, 170 erfassen beispielsweise mit 0,25 kg Wirkstoff/ha das beispielhaft ausgewählt Ungras Ackerfuchsschwanz, wobei Weisen nicht oder nur wenig geschädigt wird. Die

Vergleichsmittel A und B schädigen dagegen das Getreide sehr stark. Verbindung Nr. 103 bekämpft unerwünschte Gräser mit 1,0 kg Wirkstoff/ha selektiv in Gerste.

Die Verbindungen Nr. 75, 63, 79, 83 und 86 zeigen beispielsweise Selektivität bei der Bekämpfung unerwünschter Gräser in Mais bei einer Aufwandmenge von 1,0 kg Wirkstoff/ha.

In Anbetracht des erfaßbaren Wirkungsspektrums zur Unkrautbekämpfung, der Verträglichkeit für Kulturpflanzen oder der erwünschten Beeinflussung des Wachstums derselben sowie angesichts der Vielfalt der Applikationsmethoden können die erfindungsgemäßen Verbindungen je nach Substitutionsmuster in einer großen Zahl von Kulturpflanzen eingesetzt werden.

In Betracht kommen beispielsweise folgende Kulturen:

| Botanischer Name | Deutscher Name |
|---|---|
| Allium cepa | Küchenzwiebel |
| Ananas comosus | Ananas |
| Arachis hypogaea | Erdnuß |
| Asparagus officinalis | Spargel |
| Beta vulgaris spp. altissima | Zuckerrübe |
| Beta vulgaris spp. rapa | Futterrübe |
| Beta vulgaris spp. esculenta | Rote Rübe |
| Brassica napus var. napus | Raps |
| Brassica napus var. napobrassica | Kohlrübe |
| Brassica napus var. rapa | Weiße Rübe |
| Brassica rapa var. silvestris | Rübsen |
| Camellia sinensis | Teestrauch |
| Carthamus tinctorius | Saflor - Färberdistel |
| Carya illinoinensis | Pekannußbaum |
| Citrus limon | Zitrone |
| Citrus maxima | Pampelmuse |
| Citrus reticulata | Mandarine |
| Citrus sinensis | Apfelsine, Orange |
| Coffea arabica (Coffea canephora, Coffea liberica) | Kaffee |
| Cucumis melo | Melone |
| Cucumis sativus | Gurke |
| Cynodon dactylon | Bermudagras |
| Daucus carota | Möhre |
| Elaeis guineensis | Ölpalme |
| Fragaria vesca | Erdbeere |
| Glyoine max | Sojabohne |
| Gossypium hirsutum (Gossypium arboreum Gossypium herbaceum Gossypium vitifolium) | Baumwolle |
| Helianthus annuus | Sonnenblume |
| Helianthus tuberosus | Topinambur |
| Hevea brasiliensis | Parakautschukbaum |
| Hordeum vulgare | Gerste |
| Humulus lupulus | Hopfen |

| Botanischer Name | Deutscher Name |
|---|---|
| Ipomoea batatas | Süßkartoffeln |
| Juglans regia | Walnußbaum |
| Lactua sativa | Kopfsalat |
| Lens culinaris | Linse |
| Linum usitatissimum | Faserlein |
| Lycopersicon lycopersicum | Tomate |
| Malus spp. | Apfel |
| Manihot esculenta | Maniok |
| Medicago sativa | Luzerne |
| Metha piperita | Pfefferminze |
| Musa spp. | Obst- und Mehlbanane |
| Nicotiana tabacum (N. rustica) | Tabak |
| Olea europaea | Ölbaum |
| Oryza sativa | Reis |
| Panicum miliaceum | Rispenhirse |
| Phaseolus lunatus | Mondbohne |
| Phaseolus mungo | Erdbohne |
| Phaseolus vulgaris | Buschbohnen |
| Pennisetum glaucum | Perl- oder Rohrkolbenhirse |
| Petroselinum crispum spp. tuberosum | Wurzelpetersilie |
| Picea abies | Rotfichte |
| Abies alba | Weißtanne |
| Pinus spp. | Kiefer |
| Pisum sativum | Gartenerbse |
| Prunus avium | Süßkirsche |
| Prunus domestica | Pflaume |
| Prunus dulcis | Mandelbaum |
| Prunus persica | Pfirsich |
| Pyrus communis | Birne |
| Ribes sylvestre | Rote Johannisbeere |
| Ribes uva-crispa | Stachelbeere |
| Ricinus communis | Rizinus |
| Saccharum officinarum | Zuckerrohr |
| Secale cereale | Roggen |
| Sasamum indicum | Sesam |
| Solanum tuberosum | Kartoffel |
| Sorghum bicolor (s. vulgare) | Mohrenhirse |
| Sorghum dochna | Zuckerhirse |
| Spinacia oleracea | Spinat |

| Botanischer Name | Deutscher Name |
|---|---|
| Theobroma cacao | Kakaobaum |
| Trifolium pratense | Rotklee |
| Triticum aestivum | Weizen |
| Vaccinium corymbosum | Kulturheidelbeere |
| Vaccinium vitis-idaea | Preißelbeere |
| Vicia faba | Pferdebohnen |
| Vigna sinensis (V. unguiculata) | Kuhbohne |
| Vitis vinifera | Weinrebe |
| Zea mays | Mais |

Zur Verbreiterung des Wirkungsspektrums und zur Erzielung synergistischer Effekte können die Cyclohexenonderivate der Formel I bzw. die sie enthaltenden Mittel auch mit zahlreichen Vertretern anderer herbizider oder wachstumsregulierender Wirkstoffgruppen gemischt und gemeinsam ausgebracht werden. Beispielsweise kommen als Mischungspartner Diazine, 4H-3,1-Benzoxazinderivate, Benzothiadiazinone, 2,6-Dinitroaniline, N-Phenylcarbamate, Thiolcarbamate, Halogencarbonsäuren, Triazine, Amide, Harnstoffe, Triazinone, Uracile, andere Cyclohexan-1,3-dionderivate, Benzofuranderivate und andere in Betracht.

Außerdem kann es von Nutzen sein, die neuen Verbindungen allein oder in Kombination mit anderen Herbiziden auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien. von Interesse ist ferner die Mischbarkeit mit Mineralsalzlösungen, welche zur Bekämpfung von Ernährungs- und Spurenelementmängeln eingesetzt werden. Es können auch nichtphytotoxische Öle und Ölkonzentrate zugesetzt werden.

**Patentansprüche**

1. Cyclohexenonderivate der Formel

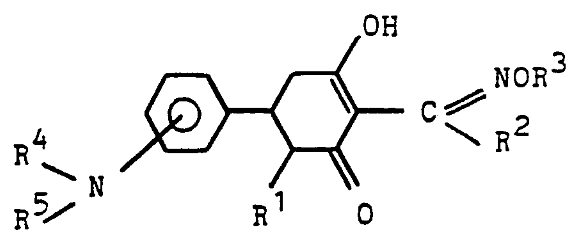

(I),

in der

$R^1$ Wasserstoff, Methoxycarbonyl, Ethoxycarbonyl, Methyl oder Cyano,

$R^2$ Alkyl mit 1 bis 4 C-Atomen,

$R^3$ Alkyl mit 1 bis 4 C-Atomen, Alkenyl mit 3 oder 4 C-Atomen, Halogenalkenyl mit 3 oder 4 C-Atomen und 1 bis 3 Halogensubstituenten oder Propargyl und

$R^4$ Wasserstoff oder Alkyl mit 1 bis 4 C-Atomen bedeuten, und

für den Fall, daß die Gruppe $—NR^4R^5$ in meta-Position steht,

$R^5$ Wasserstoff, Alkyl mit 1 bis 4 C-Atomen, Formyl, gegebenenfalls durch Nitro, Halogen, Alkyl oder Alkoxy substituiertes Benzoyl, Phenoxycarbonyl, Alkylthiocarbonyl, N,N-Dialkylcarbamoyl, N-Alkylcarbamoyl, N-Alkoxy-N-Alkylcarbamoyl oder N,N-Dialkylsulfamoyl bedeutet,

und für den Fall, daß die Gruppe $—NR^4R^5$ in para-Position steht,

$R^5$ Wasserstoff, Alkyl mit 1 bis 4 C-Atomen, gegebenenfalls durch Nitro, Halogen, Alkyl mit 2 bis 4 C-Atomen oder Alkoxy mit 1 bis 4 C-Atomen substituiertes Benzoyl, Phenoxycarbonyl, Alkylthiocarbonyl oder N,N-Dialkylsulfamoyl bedeutet,

und Salze dieser Verbindungen.

2. Cyclohexenonderivate der Formel 1 gemäß Anspruch 1, dadurch gekennzeichnet, daß $R^5$ Benzoyl bedeutet.

3. Verfahren zur Herstellung eines Cyclohexenonderivates der Formel I gemäß Anspruch 1, dadurch gekennzeichnet, daß man ein Cyclohexenonderivat der Formel

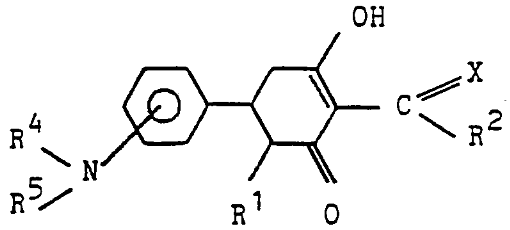

(II),

in der

die Gruppe —$NR^4R^5$ in meta- oder para-Position steht, X Sauerstoff oder —NH— bedeutet und $R^1$, $R^2$, $R^4$ und $R^5$ die in Anspruch 1 genannten Bedeutungen haben,

a) mit einer Ammoniumverbindung der Formel $R^3O—NH_3Y$, in der $R^3$ die in Anspruch 1 genannten Bedeutungen hat und Y ein Anion bedeutet, in einem inerten Verdünnungsmittel gegebenenfalls in Gegenwart von Wasser bei einer Temperatur zwischen 0 und 80°C in Gegenwart einer Base oder

b) mit einem gegebenenfalls in wäßriger Lösung vorliegenden Hydroxylamin der Formel $R^3O—NH_2$, in der $R^3$ die im Anspruch 1 genannten Bedeutungen hat, in einem inerten Lösungsmittel umsetzt.

4. Herbizid, enthaltend ein Cyclohexenonderivat der Formel I gemäß Anspruch 1 oder ein Salz einer solchen Verbindung.

5. Herbizid, enthaltend inerte Zusatzstoffe une ein Cyclohexenonderivat der Formel I gemäß Anspruch 1 oder ein Salz einer solchen Verbindung.

6. Verfahren zur Bekämpfung unerwünschten Pflanzenwachstums, dadurch gekennzeichnet, daß man die unerwünschten Pflanzen und/oder die von unerwünschten Pflanzenwachstum freizuhaltende Fläche mit einer herbizid wirksamen Menge eines Cyclohexenonderivates der Formel I gemäß Anspruch 1 oder eines Salzes einer solchen Verbindung behandelt.

7. Cyclohexenonderivate der Formel

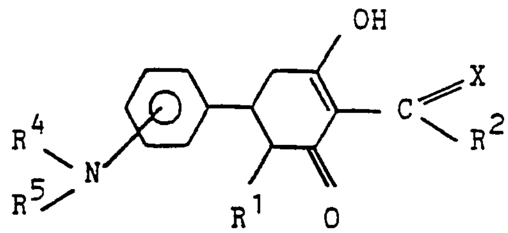

(II),

in der

die Gruppe —$NR^4R^5$ in meta- oder para-Position steht,

X Sauerstoff oder —NH— bedeutet und $R^1$, $R^2$, $R^4$ und $R^5$ die in Anspruch 1 genannten Bedeutungen haben.

**Revendications**

1. Dérivés de cyclohexénone de formule

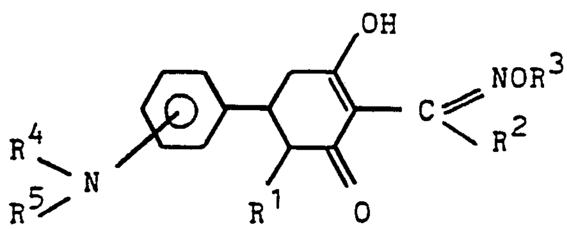

(I),

dans laquelle

$R^1$ représente hydrogène, méthoxycarbonyle, éthoxycarbonyle, méthyle ou cyano,

$R^2$, alkyle à 1 à 4 atomes C,

$R^3$, alkyle à 1 à 4 atomes C, alcényle à 3 ou 4 atomes C, halogénoalcényle à 3 ou 4 atomes C et 1 à 3 substituants halogène, ou propargyle, et

$R^4$, hydrogène ou alkyle à 1 à 4 atomes C, et

dans le cas où le groupe —$NR^4R^5$ se trouve en position méta,

$R^5$ représente hydrogène, alkyle à 1 à 4 atomes C, formyle, benzoyle éventuellement substitué par nitro, halogène, alkyle ou alcoxy, phénoxycarbonyle, alkylthiocarbonyle, N,N-dialkylcarbamoyle, N-alkylcarbamoyle, N-alcoxy-N-alkylcarbamoyle ou N,N-dialkylsulfamoyle,
et dans le cas où le groupe —$NR^4R^5$ se trouve en position para,

$R^5$ représente hydrogène, alkyle à 1 à 4 atomes C, benzoyle éventuellement substitué par nitro, halogène, alkyle à 2 à 4 atomes C ou alcoxy à 1 à 4 atomes C, phénoxycarbonyle, alkylthiocarbonyle ou N,N-dialkylsulfamoyle,

ainsi que de sels de ces composés.

2. Dérivés de cyclohexénone de formule I, selon la revendication 1, caractérisés par le fait que $R^5$ représente benzoyle.

3. Procédé de préparation d'un dérivé de cyclohexénone de formule I, selon la revendication 1, caractérisé par le fait que l'on fait réagir un dérivé de cyclohexénone de formule

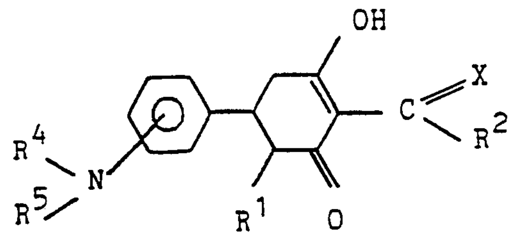

(II),

dans laquelle

le groupe —$NR^4R^5$ se trouve en position méta ou para,

X représente oxygène ou —NH— et $R^1$, $R^2$, $R^4$ et $R^5$ ont les significations données dans la revendication 1,

a) avec un composé d'ammonium de formule $R^3O—NH_3Y$, dans laquelle $R^3$ a les significations données dans la revendication 1 et Y représente un anion, dans un diluant inerte, éventuellement avec addition d'eau, à une température comprise entre 0 et 80 degrés C, en présence d'une base, ou

b) avec une hydroxylamine éventuellement présente en solution aqueuse, de formule $R^3O—NH_2$, dans laquelle $R^3$ a les significations données dans la revendication 1, dans un solvant inerte.

4. Herbicide, contenant un dérivé de cyclohexénone de formule I, selon la revendication 1, ou un sel d'un composé de ce type.

5. Herbicide, contenant des additifs inertes et un dérivé de cyclohexénone de formule I, selon la revendication 1, ou un sel d'un composé de ce type.

6. Procédé de lutte contre la croissance des plantes indésirables, caractérisé par le fait que l'on traite les plantes indésirables et/ou la surface à maintenir exempte de la croissance de plantes indésirables avec une quantité efficace au point de vue herbicide d'un dérivé de cyclohexénone de formule I, selon la revendication 1, ou d'un sel d'un composé de ce type.

7. Dérivés de cyclohexénone de formule

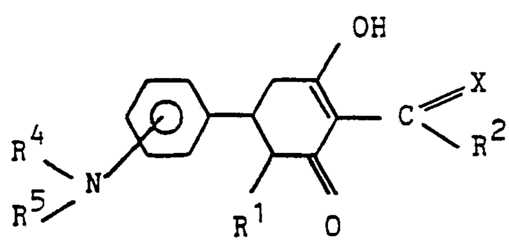

(II),

dans laquelle

le groupe —$NR^4R^5$ se trouve en position méta ou para,

X représente oxygène ou —NH— et $R^1$, $R^2$, $R^4$ et $R^5$ ont les significations données dans la revendication 1.

**Claims**

1. A cyclohexenone derivative of the formula

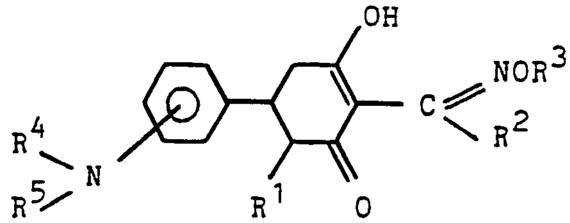

(I),

where $R^1$ is hydrogen, methoxycarbonyl, ethoxycarbonyl, methyl or cyano, $R^2$ is alkyl of 1 to 4 carbon atoms, $R^3$ is alkyl or 1 to 4 carbon atoms, alkenyl or 3 or 4 carbon atoms, haloalkenyl of 3 to 4 carbon atoms and 1 to 3 halogen substituents, or propargyl, and $R^4$ is hydrogen or alkyl of 1 to 4 carbon atoms and, when the $—NR^4R^5$ group is in the meta-position, $R^5$ is hydrogen, alkyl of 1 to 4 carbon atoms, formyl, benzoyl which is unsubstituted or substituted by nitro, halogen, alkyl or alkoxy, or is phenoxycarbonyl, alkylthiocarbonyl, N,N-dialkylcarbamoyl, N-alkylcarbamoyl, N-alkoxy-N-alkylcarbamoyl, or N,N-dialkylsulfamoyl, and, when the $—NR^4R^5$ group is in the para-position, $R^5$ is hydrogen, alkyl of 1 to 4 carbon atoms, benzoyl which is unsubstituted or substituted by nitro, halogen, alkyl of 2 to 4 carbon atoms or alkoxy of 1 to 4 carbon atoms, phenoxycarbonyl, alkylthiocarbonyl or N,N-dialkylsulfamoyl, and salts of this compound.

2. A cyclohexenone derivative of the formula I as claimed in claim 1, where $R^5$ is benzoyl.

3. A process for the preparation of a cyclohexenone derivative of the formula I as claimed in claim 1, wherein a cyclohexenone derivative of the formula

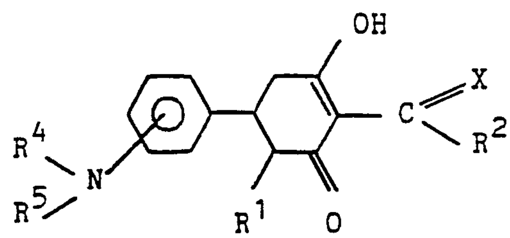

(II),

where the $—NR^4R^5$ group is in the meta- or para-position, X is oxygen or —NH—, and $R^1$, $R^2$, $R^4$ and $R^5$ have the meanings given in claim 1, is reacted with

a) an ammonium compound of the formula $R^3O—NH_3Y$, where $R^3$ has the meanings given in claim 1 and Y is an anion, in an inert diluent, in the presence or absence of water, at from 0°C to 80°C, and in the presence of a base, or

b) a hydroxylamine — if desired, in aqueous solution — of the formula $R^3O—NH_2$, where $R^3$ has the meanings given in claim 1, in an inert solvent.

4. A herbicide containing a cyclohexenone derivative of the formula I as claimed in claim 1, or a salt thereof.

5. A herbicide containing inert additives and a cyclohexenone derivative of the formula I as claimed in claim 1, or a salt thereof.

6. A process for controlling the growth of undesirable plants, wherein the undesirable plants and/or the area to be kept free from undesirable plant growth are treated with a herbicidally effective amount of a cyclohexenone derivative of the formula I as claimed in claim 1, or a salt thereof.

7. A cyclohexenone derivative of the formula

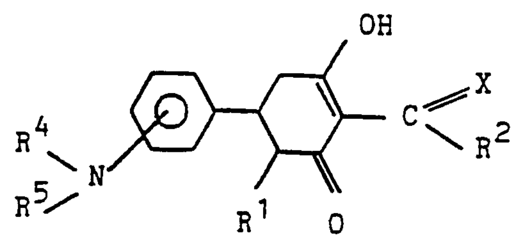

(II),

where the $—NR^4R^5$ group is in the meta- or para-position, X is oxygen or —NH— and $R^1$, $R^2$, $R^4$ and $R^5$ have the meanings given in claim 1.